# EUROPEAN PATENT SPECIFICATION

(11) **EP 2 533 401 B1**
(45) Date of publication and mention of the grant of the patent: **27.11.2013**
(21) Application number: 11009783.9
(22) Date of filing: 12.12.2011
(51) Int. Cl.: H02J 17/00

(54) **Mobile terminal and control method thereof**
Mobiles Endgerät und Steuerungsverfahren dafür
Terminal mobile et son procédé de contrôle

(30) Priority: 26.05.2011 KR 20110049861; 27.05.2011 KR 20110050491
(43) Date of publication of application: 12.12.2012
(73) Proprietor: LG Electronics Inc., Seoul 150-721 (KR)
(72) Inventor: Kim, Jonghwan, Seoul, 153-801 (KR); Park, Changhoon, Seoul, 153-801 (KR); Doo, Wonjung, Seoul, 153-801 (KR)
(74) Representative: Beyer, Andreas

(56) References cited:
- US-A1- 2010 181 964

## Description

The present application claims priority to Korean Application No. 10-2011-0049861 filed in Korea on May 26, 2011 and No. 10-2011-0050491 filed in Korea on May 27, 2011.

### BACKGROUND

### 1.Field

The present invention relates to a mobile terminal and a control method thereof and, more particularly, to a mobile terminal and a control method thereof capable of optimizing battery consumption by changing an activated state of a display according to whether or not wireless charging is available, and performing a payment procedure through a certain billing method when billing is required for wireless charging.

### 2. Related Art

As functions of terminals such as personal computers, laptop computers, cellular phones diversify, the terminals become multimedia players having multiple functions for capturing pictures or moving images, playing music, moving image files and games and receiving broadcasting programs.

Terminals can be categorized as mobile terminals and stationary terminals. The mobile terminals can be further comprised of handheld terminals and vehicle mount terminals according to whether users can personally carry the terminals. Conventional terminals including mobile terminals provide an increasing number of complex and various functions.

To support and enhance the increasing number of functions in a terminal, improving a structural part and/or a software part of the terminal would be desirable.

US 2010/181964 discloses a system for charging tools comprising a power transmitter having a transmission range and a plurality of tools. If a tool is within the transmission range such that a received power level is above a threshold value, it may be powered and activated. If the received power level is below a threshold value and the battery is depleted, the tool may be deactivated while the battery is trickle charged, or features or functions of the tool may be deactivated to conserve power, such as deactivating a display or disconnecting power to a motor or a processor.

### SUMMARY

Accordingly, one object of the present invention is to address the above-noted and other drawbacks of the related art.

A mobile terminal and a control method of a mobile terminal according to the pending independent claims are provided.

An object of the present invention is to provide a mobile terminal and a control method thereof capable of optimizing battery consumption by changing an activated state of a display according to whether or not wireless charging is available, and performing a payment procedure through a certain billing method when billing is required for wireless charging.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
- FIG. 1: is a block diagram of a mobile terminal according to an embodiment of the present invention;
- FIG. 2A: is a front perspective view of the mobile terminal according to an embodiment of the present invention;
- FIG. 2B: is a rear perspective view of the mobile terminal according to an embodiment of the present invention;
- FIGS. 2C and 2D: illustrate forms of the mobile terminal and display screens according to various embodiments of the present invention;
- FIG. 3: is a conceptional view for explaining a proximity depth of a proximity sensor;
- FIG. 4: illustrates a configuration of a CDMA wireless communication system communicating with the mobile terminal shown in FIG. 1;
- FIG. 5: is a flowchart illustrating a method of a mobile terminal according to an embodiment of the present invention;
- FIG. 6: is a graph showing a change in a battery capacity over time;
- FIG. 7: is a view showing areas, in which wireless charging is available, displayed on a map;
- FIG. 8: is a view showing a process of selectively activating a display of the mobile terminal of FIG. 5;
- FIG. 9: is a graph of quantity of light of the mobile terminal of FIG. 5 over time;
- FIG. 10: is a view showing a process of entering, by the mobile terminal, a wireless charging area according to an embodiment of the present invention;
- FIG. 11: shows displays according to the distance to a wireless charging area and a charging state of the mobile terminal according to an embodiment of the present invention;
- FIG. 12: is a graph showing a change in volume according to the distance to a wireless charging area and a charging state of the mobile terminal according to an embodiment of the present invention;
- FIGS. 13 and 14: show displays according to the distance to a wireless charging area and a charging state of the mobile terminal according to an embodiment of the present invention;
- FIGS. 15 and 16: illustrate a method of displaying a wireless charging area of the mobile terminal according to an embodiment of the present invention;
- FIGS. 17 to 19: illustrate operations of the mobile terminal according to another embodiment of the present invention;
- FIG. 20: is a flowchart of the mobile terminal according to an embodiment of the present invention;
- FIG. 21: is a flowchart illustrating a process of wireless charging the mobile terminal;
- FIG. 22 is: a view of displaying areas in which wireless charging is available on a map;
- FIG. 23 is: a table dividing the wireless charging available area of FIG. 22 into a paid area and a free area;
- FIG. 24 is: a view showing a process of entering a wireless charging area;
- FIG. 25 is: a view showing an authentication process of the mobile terminal of FIG. 20;
- FIG. 26 is: a view showing setting of a charging scheme of the mobile terminal
- of: FIG. 20;
- FIGS. 27 to 29: are views showing a process according to the charging scheme of FIG. 25;
- FIGS. 30 to 32: are views showing operation of a mobile terminal according to another embodiment of the present invention; and
- FIGS. 33 and 34: are views showing a method for displaying a wireless charging area of the mobile terminal according to another embodiment of the present invention.

### DETAILED DESCRIPTION OF THE PREFERRED EMBODIMENTS

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art.

Hereinafter, a mobile terminal relating to the present invention will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

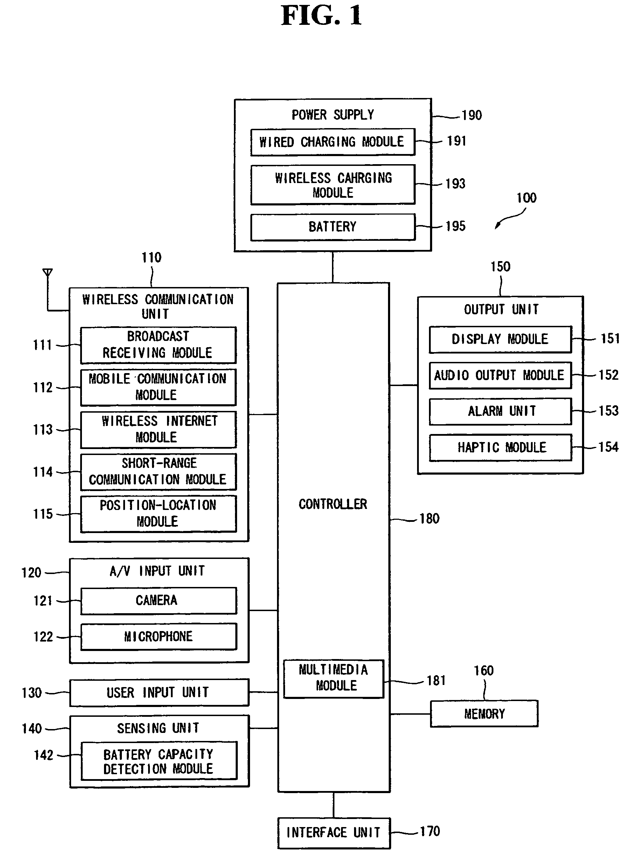

FIG. 1 is a block diagram of a mobile terminal 100 according to an embodiment of the present invention. Other embodiments, configurations and arrangements may also be provided. As shown, the mobile terminal 100 may include a radio communication unit 110, an audio/video (A/V) input unit 120, a user input unit 130, a sensing unit 140, an output unit 150, a memory 160, an interface 170, a controller 180, and a power supply 190. Not all of the components shown in FIG. 1 may be essential parts and the number of components included in the mobile terminal 100 may be varied. The components of the mobile terminal 100 will now be described.

The radio communication unit 110 may include at least one module that enables radio communication between the mobile terminal 100 and a radio communication system or between the mobile terminal 100 and a network in which the mobile terminal 100 is located. For example, the radio communication unit 110 may include a broadcasting receiving module 111, a mobile communication module 112, a wireless Internet module 113, a local area communication module 114, and a location (or position) information module 115.

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The local area communication module 114 may correspond to a module for local area communication. Further, Bluetooth®, radio frequency identification (RFID), infrared data association (IrDA), ultra wideband (UWB) and/or ZigBee® may be used as a local area communication technique.

The location information module 115 may confirm or obtain the position of the mobile terminal 100. The position information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan among others.

A global positioning system (GPS) module is a representative example of the location information module 115. The GPS module 115 may calculate information on distances between one point or object and at least three satellites and information on a time when the distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. In addition, the GPS module 115 may continuously calculate the current position in real time and calculate velocity information using the location or position information.

As shown in FIG. 1, the A/V input unit 120 may input an audio signal or a video signal and include a camera 121 and a microphone 122. The camera 121 may process image frames of still images or moving images obtained by an image sensor in a video telephony mode or a photographing mode. The processed image frames may be displayed on a display 151 which may be a touch screen.

The image frames processed by the camera 121 may be stored in the memory 160 or may be transmitted to an external device through the radio communication unit 110. The mobile terminal 100 may also include at least two cameras 121.

The microphone 122 may receive an external audio signal in a call mode, a recording mode or a speech recognition mode and process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and generate a sensing signal for controlling operation of the mobile terminal 100. For example, in case of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141.

The output unit 150 may generate visual, auditory and/or tactile output and may include the display 151, an audio output module 152, an alarm 153 and a haptic module 154. The display 151 may display information processed by the mobile terminal 100. The display 151 may display a user interface (UI) or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

In addition, the display 151 may include at least one of a liquid crystal display, a thin film transistor liquid crystal display, an organic light-emitting diode display, a flexible display and a three-dimensional display. Some of these displays may be of a transparent type or a light transmissive type. That is, the display 151 may include a transparent display.

The transparent display may include a transparent liquid crystal display. The rear structure of the display 151 may also be of a light transmissive type. Accordingly, a user may see an object located behind the body of the mobile terminal 100 through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

Further, when the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor 141 of the sensing unit 140 may be located in an internal region of the mobile terminal 100, surrounded by the touch screen, or near the touch screen. The proximity sensor 141 may sense an object approaching a predetermined sensing face or an object located near the proximity sensor using an electromagnetic force or infrared rays without having mechanical contact. The proximity sensor 141 may have a lifetime longer than a contact sensor and may thus have a wide application in the mobile terminal 100.

The proximity sensor 141 may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of convenience of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the radio communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and the like. The audio output module 152 may output sounds through an earphone jack. The user may hear the sounds by connecting an earphone to the earphone jack.

The alarm 153 may output a signal for indicating generation of an event of the mobile terminal 100. For example, alarms may be generated when receiving a call signal, receiving a message, inputting a key signal, or inputting touch. The alarm 153 may also output signals in forms different from video signals or audio signals, for example, a signal for indicating generation of an event through vibration. The video signals or the audio signals may also be output through the display 151 or the audio output module 152.

The haptic module 154 may generate various haptic effects that the user can feel. One example of the haptic effects is vibration. The intensity and/or pattern of vibration generated by the haptic module 154 may also be controlled. For example, different vibrations may be combined and output or may be sequentially output. The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations. The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operation of the controller 180 and temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk or an optical disk. The mobile terminal 100 may also operate in relation to a web storage performing the storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and a universal subscriber identify module (USIM). An identification device including the user identification module may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 as shown in FIG. 1 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to hardware implementation, embodiments of the present disclosure may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. The embodiments may be implemented by the controller 180.

According to software implementation, embodiments such as procedures or functions may be implemented with a separate software module executing at least one function or operation. Software codes may be implemented according to a software application written in an appropriate software language. The software codes may be stored in the memory 160 and executed by the controller 180.

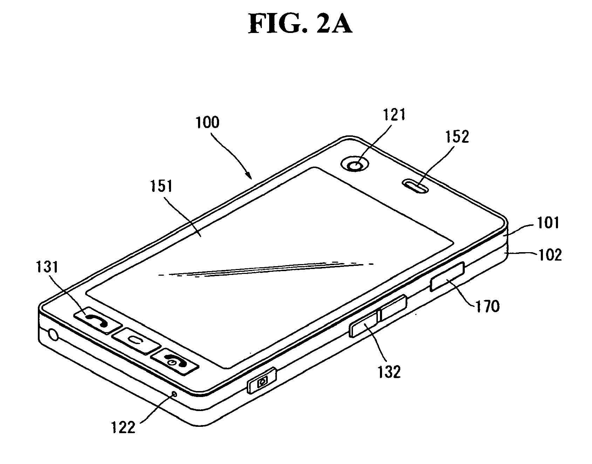

FIG. 2A is a front perspective view of a mobile terminal or a handheld terminal 100 according to an embodiment of the present invention.

The handheld terminal 100 has a bar type terminal body. However, the present invention is not limited to a bar type terminal and can be applied to terminals of various types including slide type, folder type, swing type and swivel type terminals having at least two bodies that are relatively movably combined.

The terminal body includes a case (a casing, a housing, a cover, etc.) forming the exterior of the terminal 100. In the present embodiment, the case can be divided into a front case 101 and a rear case 102. Various electronic components are arranged in the space formed between the front case 101 and the rear case 102. At least one middle case can be additionally arranged between the front case 101 and the rear case 102.

The cases can be formed of plastics through injection molding or made of a metal material such as stainless steel (STS) or titanium (Ti).

The display unit 151, the audio output unit 152, the camera 121, the user input unit 130/131 and 132, the microphone 122 and the interface 170 can be arranged in the terminal body, specifically, in the front case 101.

The display unit 151 occupies most part of the main face of the front case 101. The audio output unit 152 and the camera 121 are arranged in a region in proximity to one of both ends of the display unit 151 and the user input unit 131 and the microphone 122 are located in a region in proximity to the other end of the display unit 151. The user input unit 132 and the interface 170 are arranged on the sides of the front case 101 and the rear case 102.

The user input unit 130 is operated to receive commands for controlling the operation of the handheld terminal 100 and can include a plurality of operating units 131 and 132. The operating units 131 and 132 can be referred to as manipulating portions and employ any tactile manner in which a user operates the operating units 131 and 132 while having tactile feeling.

First and second operating units 131 and 132 can receive various inputs. For example, the first operating unit 131 receives commands such as start, end and scroll and the second operating unit 132 receives commands such as control of the volume of sound output from the audio output unit 152 or conversion of the display unit 151 to a touch recognition mode.

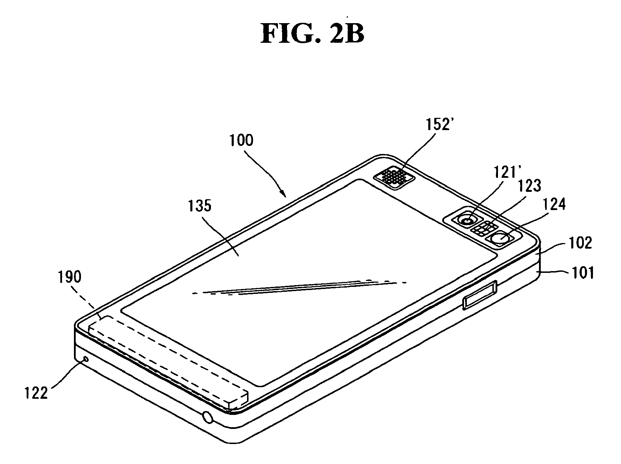

FIG. 2B is a rear perspective view of the handheld terminal shown in FIG. 2A according to an embodiment of the present invention.

Referring to FIG. 2A, a camera 121' can be additionally attached to the rear side of the terminal body, that is, the rear case 102. The camera 121' has a photographing direction opposite to that of the camera 121 shown in FIG. 2A and can have pixels different from those of the camera 121 shown in FIG. 2A.

For example, it is desirable that the camera 121 has low pixels such that it can capture an image of the face of a user and transmit the image to a receiving part in case of video telephony while the camera 121' has high pixels because it captures an image of a general object and does not immediately transmit the image in many cases. The cameras 121 and 121' can be attached to the terminal body such that they can be rotated or pop-up.

A flash bulb 123 and a mirror 124 are additionally arranged in proximity to the camera 121'. The flash bulb 123 lights an object when the camera 121' takes a picture of the object. The mirror 124 is used for the user to look at his/her face in the mirror when the user wants to self-photograph himself/herself using the camera 121'.

An audio output unit 152' can be additionally provided on the rear side of the terminal body. The audio output unit 152' can achieve a stereo function with the audio output unit 152 shown in FIG. 2A and be used for a speaker phone mode when the terminal is used for a telephone call.

A broadcasting signal receiving antenna can be additionally attached to the side of the terminal body in addition to an antenna for telephone calls. The antenna constructing a part of the broadcasting receiving module 111 shown in FIG. 1 can be set in the terminal body such that the antenna can be pulled out of the terminal body.

The power supply 190 for providing power to the handheld terminal 100 is set in the terminal body. The power supply 190 can be included in the terminal body or detachably attached to the terminal body.

A touch pad 135 for sensing touch can be additionally attached to the rear case 102. The touch pad 135 can be of a light transmission type as the display unit 151. In this case, if the display unit 151 outputs visual information through both sides thereof, the visual information can be recognized through the touch pad 135. The information output through both sides of the display unit 151 can be controlled by the touch pad 135. Otherwise, a display is additionally attached to the touch pad 135 such that a touch screen can be arranged even in the rear case 102.

The touch pad 135 operates in connection with the display unit 151 of the front case 101. The touch pad 135 can be located in parallel with the display unit 151 behind the display unit 151.The touch panel 135 can be identical to or smaller than the display unit 151 in size.

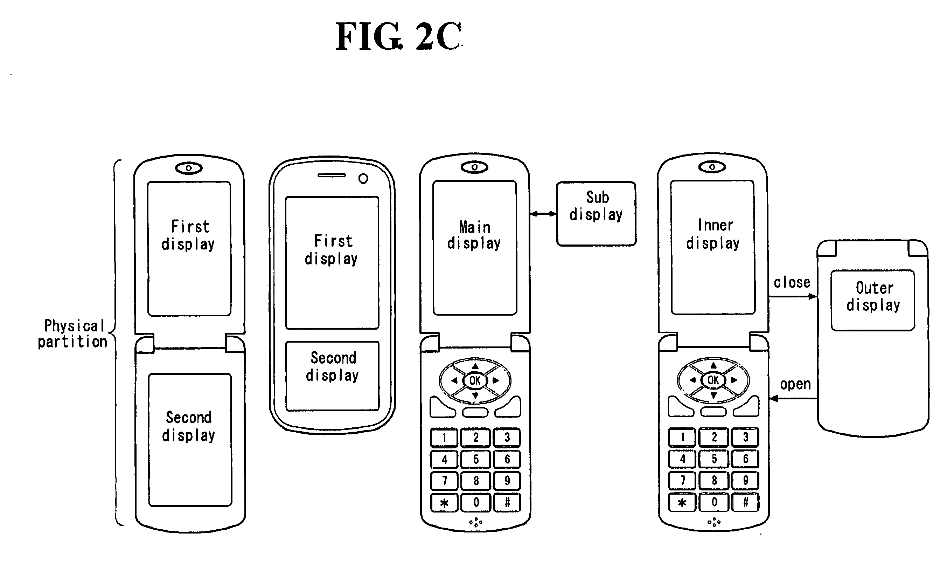

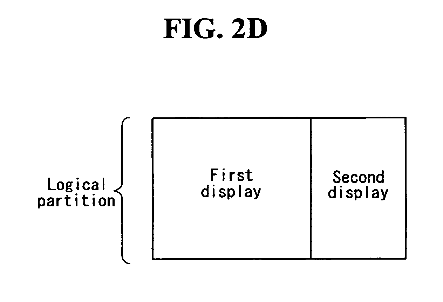

FIGS. 2C and 2D illustrate the mobile terminal 100 and the display unit 151 according to various embodiments of the present invention.

Referring to FIG. 2C, the display unit 151 can include a first display and a second display which are physically separated from each other. In a folder type or slide type mobile terminal having two bodies connected through a hinge or slide, the first display (or main display) can be formed on the inner face or outer face of one of the bodies and the second display (or sub display) can be formed on the inner face or outer face of the other body. The sub display is separated from the mobile terminal and detachably combined with the mobile terminal body through an interface to display data from the mobile terminal 100.

The display unit 151 can include first and second displays which are logically separated from each other in a display panel, as illustrated in FIG. 2D.

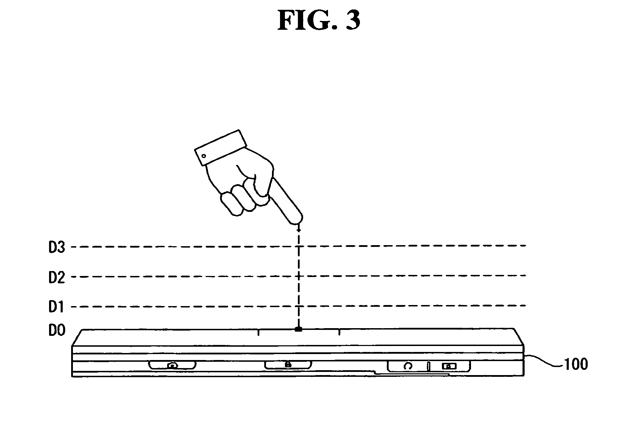

FIG. 3 is a conceptional view for explaining a proximity depth of the proximity sensor.

As shown in FIG. 3, when a pointer such as a user's finger approaches the touch screen, the proximity sensor located inside or near the touch screen senses the approach and outputs a proximity signal.

The proximity sensor can be constructed such that it outputs a proximity signal according to the distance between the pointer approaching the touch screen and the touch screen (referred to as "proximity depth").

The distance in which the proximity signal is output when the pointer approaches the touch screen is referred to as a detection distance. The proximity depth can be known by using a plurality of proximity sensors having different detection distances and comparing proximity signals respectively output from the proximity sensors.

FIG. 3 shows the section of the touch screen in which proximity sensors capable of sensing three proximity depths are arranged. Proximity sensors capable of sensing less than three or more than four proximity depths can be arranged in the touch screen.

Specifically, when the pointer completely comes into contact with the touch screen (D0), it is recognized as contact touch. When the pointer is located within a distance D1 from the touch screen, it is recognized as proximity touch of a first proximity depth. When the pointer is located in a range between the distance D1 and a distance D2 from the touch screen, it is recognized as proximity touch of a second proximity depth. When the pointer is located in a range between the distance D2 and a distance D3 from the touch screen, it is recognized as proximity touch of a third proximity depth. When the pointer is located at longer than the distance D3 from the touch screen, it is recognized as cancellation of proximity touch.

Accordingly, the controller 180 can recognize the proximity touch as various input signals according to the proximity distance and proximity position of the pointer with respect to the touch screen and perform various operation controls according to the input signals.

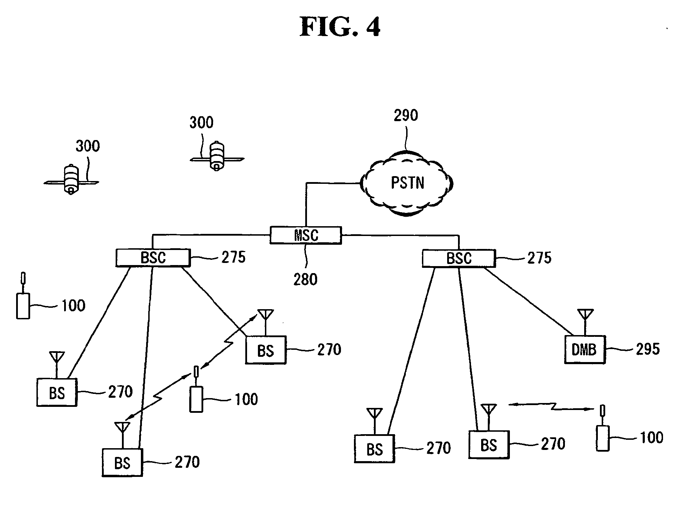

Referring to FIG. 4, a CDMA wireless communication system includes mobile terminals 100, base stations 270, base station controllers 275, and a mobile switching center 280. The mobile switching center 280 is connected to a public switch telephone network (PSTN) 290. The mobile switching center 280 is connected to the base station controllers 275. The base station controllers 275 are connected to the base stations 270 through backhaul lines. The backhaul lines may be constructed according to E1/T1, ATM, IP, PPP, frame relay, HDSL, ADSL or xDSL well-known in the art. The CDMA wireless communication system may include at least two base station controllers 275.

Each base station 270 may include a sector or sectors and each sector may include an omnidirectional antenna or an antenna adjusted to a specific radiation direction from the base station 270. Otherwise, each sector may include two diversity reception antennas. Each base station 270 is constructed to have frequency assignments, and the frequency assignments may have specific spectra (for example, 1.25MHz and 5MHz).

Intersection of sectors and frequency assignments may be referred to a CDMA channel.

The base stations 270 may be referred to as base station transceiver subsystems (BTSs). "Base station" may be used as a term that collectively designates the base station controller 275 and one or more base stations 270 in several examples. Furthermore, the base stations 270 may be referred to as "cell sites". Otherwise, individual sectors of a given base station 270 may be referred to as cell sites.

A terrestrial DMB transmitter 295 can transmit broadcasting signals to the mobile terminals 100 operating in the CDMA wireless communication system. The broadcasting receiving module 111 of each mobile terminal 100 is constructed to receive the broadcasting signals transmitted from the DMB transmitter 295. This can be similarly applied to different types of broadcast and multicast signaling as described above.

FIG. 4 illustrates global positioning system (GPS) satellites 300. These satellites 300 can track the positions of some or all of the mobile terminals 100. Although two satellites are shown in FIG. 4, position information can be obtained from less than or more than two satellites. In addition, other position-tracking techniques (for example, position-tracking techniques that can substitute for GPS technique or can be added to the GPS technique) can be used. If required, some or all of the GPS satellites 300 can support satellite DMB transmission separately or additionally.

When the CDMA wireless communication system operates, the base stations 270 receive reverse link signals from the mobile terminals 100. The mobile terminals 100 may be in a state that the mobile terminals 100 are making calls, sending messages or performing other communications. The reverse link signals received by the base stations 270 are processed by the base stations 270. The processed data is transmitted to the base station controllers 275 connected to the base stations 270. The base station controllers 275 provide call resource allocation and mobility management functionality including soft handoffs between the base stations 270. Furthermore, the base station controllers 275 transmit the received data to the mobile switching center 280. The mobile switching center 280 provides additional routing services for interfacing with the PSTN 290. Similarly, the PSTN 290 interfaces with the mobile switching center 280, and the mobile switching center 280 interfaces with the base station controllers 275. The base station controllers 275 control the base stations 270 to transmit forward link signals to the mobile terminals 100.

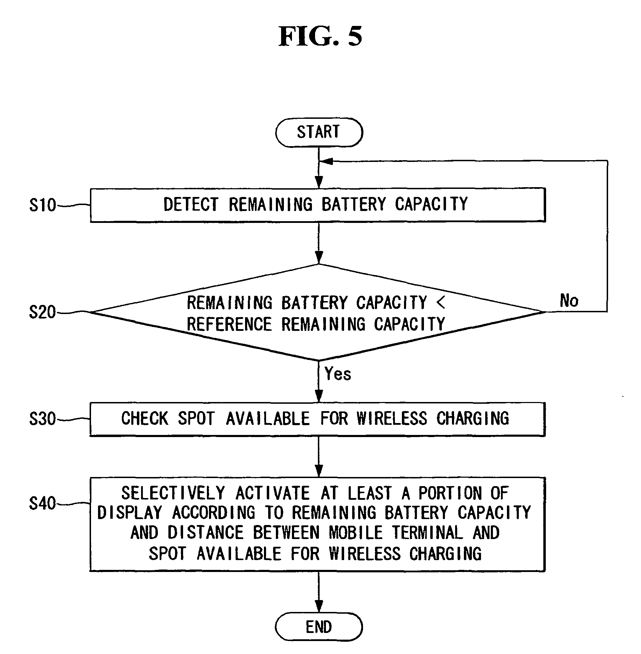

FIG. 5 is a flowchart illustrating a method of a mobile terminal according to an embodiment of the present invention.

As shown in FIG. 5, the controller 180 of the mobile terminal 100 according to an embodiment of the present invention may perform detecting a remaining capacity of the battery 195 in operation S10.

The battery 195 is installed in the mobile terminal 100 and provides power to the mobile terminal 100 while the mobile terminal 100 is carried around. The battery 195 may be charged upon receiving power through a wired charging module 191 and/or a wireless charging module 193. A charged state of the battery 195 may be detected through a remaining battery capacity detection module 142 of the sensing unit 140.

The remaining battery capacity detection module 142 may detect power quantity charged in the battery 195. Namely, when a maximum power quantity chargeable in the battery 195 is 1, the remaining battery capacity detection module 142 can detect a numerical value corresponding to the power quantity currently charged in the battery 195. The remaining battery capacity detection module 142 may substantially measure the current power quantity in real time or at certain time intervals.

The wired charging module 191 may be a unit for charging the battery 195 upon receiving power through a fixed line. For example, the wired charging module 191 may be a device which is provided with power from a socket (or an electrical outlet) and supplies power to the battery 195.

The wireless charging module 193 may be a unit used to charge the battery 195 upon receiving power wirelessly. The wireless charging module 193 is different from the wired charging module 191, in that a wireless power line is formed between the socket and the mobile terminal 100 while the battery 195 is in a state of being charged. The charging of the battery 195 through the wireless charging module 193 may be made through magnetic induction, magnetic resonance, or the like.

The wireless charging using magnetic induction may refer to a scheme of wirelessly transmitting power by using electromagnetic induction. Electromagnetic induction may be a scheme of performing charging through magnetic field induced between a primary coil transmitting electricity and a secondary coil receiving electricity.

Wireless charging using magnetic resonance may be a wireless charging scheme using the principle of making a transmitter and a receiver resonant with the same frequency. Magnetic resonance may allow wireless charging at a relatively remote area. In addition, magnetic resonance may allow a transmitter and a receiver to have a one-to-many relationship. Namely, magnetic resonance allows for charging of several mobile terminals 100.

In operation S20, comparing the detected remaining battery capacity and a reference remaining capacity may be performed.

The remaining capacity may refer to power quantity remaining in the battery 195. The remaining capacity may be detected through the remaining battery capacity detection module 142.

The reference remaining capacity may be a pre-set value. When a fully charged state of the battery 195 is set to be 1, the reference remaining capacity may be determined to be 0.5, 0.3, 0.1, or the like. The reference remaining capacity may be appropriately adjusted when the mobile terminal 100 is manufactured or through a user setting.

A plurality of reference remaining capacities may be provided. For example, 0.5, 0.3, and 0.3 may be determined as reference remaining capacities and a corresponding operation may be performed based on each of the reference remaining capacities.

When the remaining battery capacity is smaller than the reference remaining capacity, checking a spot available for wireless charging may be performed in operation S30.

Wireless charging may be available within a certain radius from a device that performs a wireless charging function. This may be similar to Wi-Fi which is used within a certain radius from an access point (AP). Also, in the case of wireless charging using magnetic induction, a spot available for wireless charging may refer to a spot in which charging based on the magnetic induction scheme is provided.

In operation S40, selectively activating the display 151 according to the remaining battery capacity and the distance between the mobile terminal and the spot available for wireless charging may be performed.

The remaining battery capacity may be detected through the remaining battery detection module 142 as described above.

The distance between the mobile terminal and the spot available for wireless charging may be calculated based on location information obtained through the location information module 115. Namely, the current location of the mobile terminal 100 may be known based on a GPS signal obtained through the location information module 115. Also, information regarding the spot available for wireless charging may be obtained through the mobile communication module 112, the wireless Internet module113, the short-range communication module 114, or the like.

The controller 180 may selectively activate at least a portion of the display 151 based on the remaining battery capacity and the distance between the mobile terminal and the spot available for wireless charging.

The activation of at least a portion of the display 151 means that an area for displaying an image may be limited. For example, when the entire area of the display 151 is 100%, the image may be displayed on the entire area or only on 50% of the entire area. In addition, the position of the image displayed on the 50% of the entire area may be selected. For example, the image may be displayed at a central portion of the display 151 or at a left or right portion, rather than at the central portion, of the display 151.

The activation of at least a portion of the display 151 may be sequentially performed with respect to a plurality of reference remaining capacity. For example, when a state in which the battery 195 is fully charged is 1, the reference remaining capacities may be set to be 0.5, 0.3, and 1. When the remaining battery capacity is 0.5, the controller 180 may display an image on a 50% area of the display 151. When the remaining battery capacity is 0.3, the controller 180 may display an image on a 30% area of the display 151. When the remaining battery capacity is 0.1, the controller 180 may display an image on a 10% area of the display 151.

The activation of at least a portion of the display 151 may be made based on the remaining battery capacity and the distance between the mobile terminal and the spot available for wireless charging. For example, when the remaining battery capacity is less than the reference remaining capacity, the controller 180 may display an image only at the 50% portion of the display 151. Thus, an effect of reducing consumption of power charged in the battery 195 can be obtained. In addition, when the distance between the mobile terminal 100 and the spot available for wireless charging is farther than a reference distance, the controller 180 may display an image only on a certain area of the display 151. Thus, an effect of reducing power consumption while on the move to the spot available for wireless charging can be obtained.

The activation of at least a portion of the display 151 may include adjusting brightness of the display 151. For example, when a remaining battery capacity is small and the distance between the mobile terminal and the spot available for wireless charging is far, the brightness of the display 151 may be adjusted to be darker.

Since at least a portion of the display 151 is selectively activated according to the remaining battery capacity and the distance to the spot available for wireless charging, power charged in the battery 195 can be effectively used.

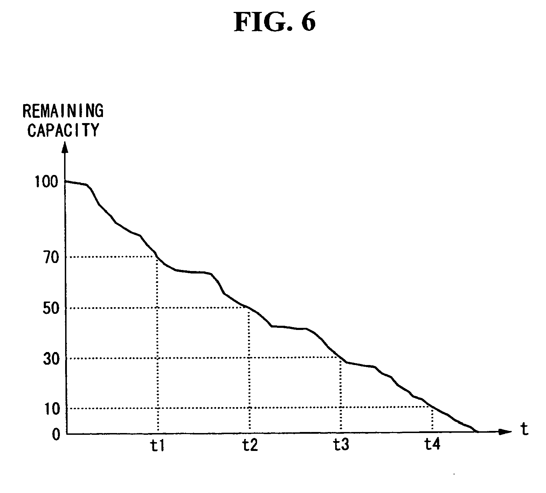

FIG. 6 is a graph showing a change in a battery capacity over time.

As shown in FIG. 6, power charged in the battery 195 of the mobile terminal 100 may be reduced as the mobile terminal 100 is used.

While the power charged in the battery 195 is being reduced, there may be points in time t1, t2, t3, and t4 at which the remaining capacities of the battery 195 are 70%, 50%, 30%, and 10% of the fully charged battery 195, respectively.

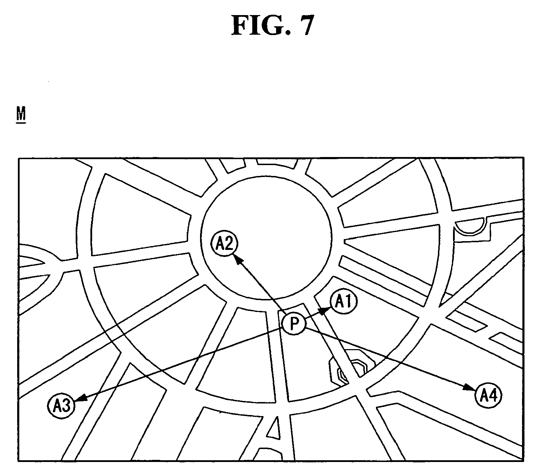

FIG. 7 is a view showing areas, in which wireless charging is available, displayed on a map;

As shown in FIG. 7, the mobile terminal 100 may be located at spot P. The location of the mobile terminal 100 may be calculated through the location information module 115.

There may be spots available for wireless charging around the mobile terminal 100. For example, the spots available for wireless charging may include A1 to A4. Information regarding the spots A1 to A4 may be obtained through the mobile communication module 112, the wireless Internet module 113, the short-range communication module 114, or the like.

The information regarding the spots A1 to A4 may include information regarding the locations of the spots A1 to A4, information regarding a range available for wireless charging through the spots A1 to A4, information regarding a wireless charging strength of the spots A1 to A4, information regarding wireless charging efficiency of the spots A1 to A4; and the like.

When the information regarding the spot P, current location of the mobile terminal 100, and the information regarding the spots A1 to A4, spots available for wireless charging are obtained, the controller 180 can calculate the distance to the spots available for wireless charging.

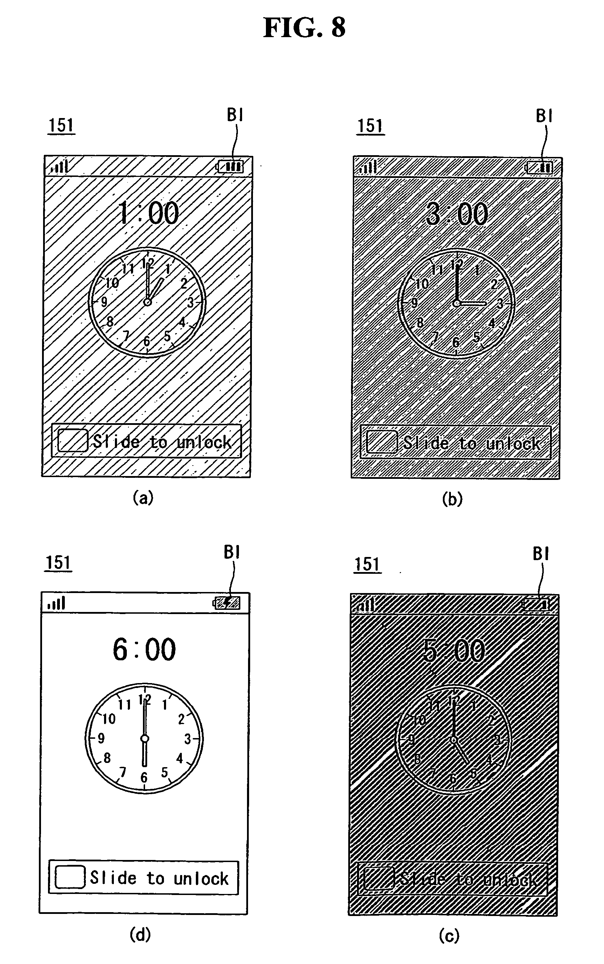

FIG. 8 is a view showing a process of selectively activating the display of the mobile terminal of FIG. 5.

As shown in FIG. 8, the mobile terminal 100 according to an embodiment of the present invention may selectively activate the display 151.

FIG. 8(a) shows a case in which power charged in the battery 195 is greater than a first reference remaining capacity. In this case, the controller 180 may control the display 151 to be in a first state. The first state may be a state in which the display 151 is relatively brighter. The brightness of the display 151 may be adjusted through the brightness of a backlight. The charge remaining capacity of the battery 195 may be displayed on a battery indicator B1.

FIG. 8(b) shows a case in which power charged in the battery 195 is smaller than the first reference remaining capacity but greater than a second reference remaining capacity. In this case, the controller 180 may control the display 151 to be in a second state. The second state may be a state in which the display 151 is less brighter than the first state.

FIG. 8(c) shows a case in which power charged in the battery 195 is smaller than the second reference remaining capacity and greater than a third reference remaining capacity. In this case, the controller 180 may control the display 151 to be in a third state. The third state may be a state in which the display 151 is less brighter than the second state.

FIG. 8(d) shows a case in which the battery 195 is in a fourth state of being charged. When the battery 195 is in a state of being charged, the controller 180 may control the display 151 to be in the first stare or in a brighter state than the first state.

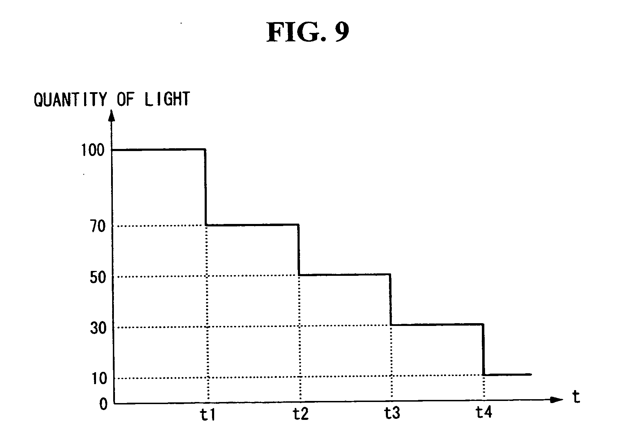

FIG. 9 is a graph of quantity of light of the mobile terminal of FIG. 5 over time.

As shown in FIG. 9, the display 151 of the mobile terminal 100 according to an embodiment of the present invention may be changed according to the remaining capacity of the battery 195. For example, when the maximum brightness of the display 151 is 100%, as time passes from a point in time t1 to a point in time t4, the brightness of the display 151 may be changed to be 70% to 10%. Here, the points in time t1 to t4 may correspond to the points in time t1 to t4 of FIG. 6. Namely, the points in time may be points in time at which the remaining capacity of the battery 195 is 70% to 10%, respectively.

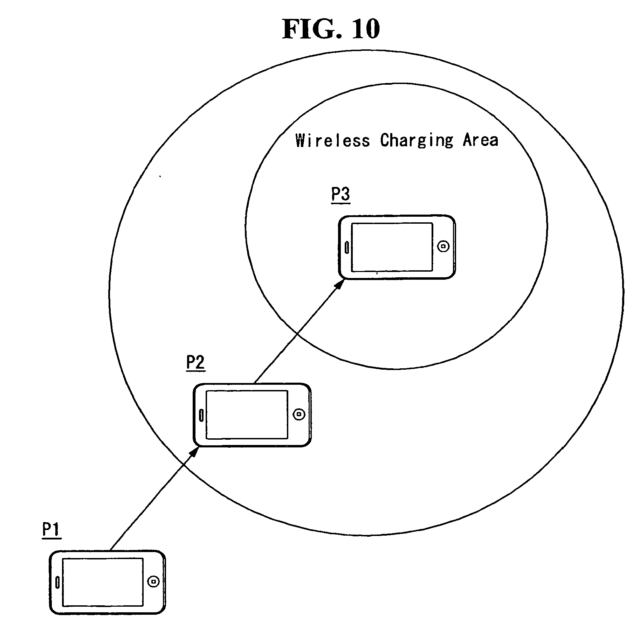

FIG. 10 is a view showing a process of entering, by the mobile terminal, a wireless charging area according to an embodiment of the present invention.

As shown in FIG. 10, when the mobile terminal according to an embodiment of the present invention enters the area available for wireless charging, the display 151 may be selectively activated.

The mobile terminal 100 may be currently at a first location P1. The first location P1 may be an outer side of the area available for wireless charging. Namely, this means that, when the mobile terminal is at the first location P1, charging using wireless charging may not be performed. In this state, the controller 180 may perform a controlling operation of minimizing the use of the battery 195 of the mobile terminal 100. For example, as mentioned above, the controller 180 may perform an operation such as reducing the quantity of light of the display 151 or reducing a display area of the display 151.

The mobile terminal 100 may be at a second location P2. The second location P2 may be an outer side of the area available for wireless charging. Namely, it means that, like the first location P1, charging using wireless charging may not be performed also at the second location P2. Here, unlike the first location P1, the second location P2 may be closer to a third location P3, an area available for wireless charging of the mobile terminal 100. When the mobile terminal is close to the third location P3, an area available for wireless charging, the controller 180 may increase the quantity of light, a display area, of the like, of the display 151 compared with the first location P1.

The mobile terminal 100 may be at the third location P3. The third location P3 may be an inner side of the area available for wireless charging. When wireless charging is performed at the third location P3, the controller 180 may maximize the quantity of light, the display area, or the like, of the display 151.

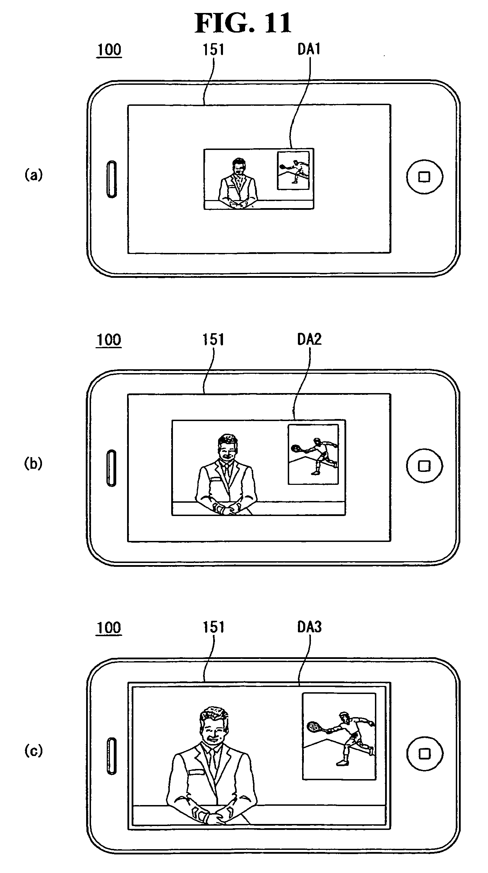

FIG. 11 shows displays according to the distance to the wireless charging area and a charging state of the mobile terminal according to an embodiment of the present invention;

As shown in FIG. 11, a display state of the display 151 of the mobile terminal 100 according to an embodiment of the present invention may be changed according to the distance to the wireless charging area.

As shown in FIG. 11(a), the controller 180 may display an image only at a first area DA1 of the display 151. The first area DA1 may be a small area compared with the entire area DA1 of the display 151. The image may be displayed on the first area DA1 when the mobile terminal is at the first location (P1 in FIG. 10). For example, it means that, when the remaining capacity of the battery 195 is smaller than a certain level and the distance to the charging available area is far, the image may be displayed on the first area DA1.

As shown in FIG. 11(b), the controller 180 may display the image only at a second area DA2 of the display 151. The second area DA2 may be smaller than the entire area of the display 151 and larger than the first area DA1. The image may be displayed on the second area DA2 when the mobile terminal 100 is at the second location (P2 in FIG. 10). For example, it means that, when the remaining capacity of the battery 195 is smaller than a certain level and the distance to the charging available area is relatively close.

As shown in FIG. 11(c), the controller 180 may display only at a third area DA3 of the display 151. The third area DA3 may be the entire area of the display 151. The image may be displayed on the third area DA3 when the mobile terminal 100 is at the third location (P3 in FIG. 10). When the mobile terminal 100 is at the third location (P3 in FIG. 10) available for wireless charging, the mobile terminal 100 can be wirelessly charged. Thus, the image may be displayed on the entire surface of the display 151 regardless of the remaining capacity of the battery 195.

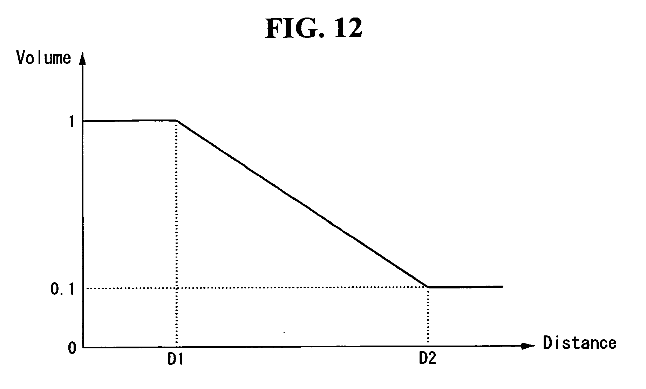

FIG. 12 is a graph showing a change in volume according to the distance to a wireless charging area and a charging state of the mobile terminal according to an embodiment of the present invention.

As shown in FIG. 12, the controller 180 of the mobile terminal 100 according to an embodiment of the present invention may change the size of an output sound volume according to the distance to the area available for wireless charging. When D1 is closer to the wireless charging available area than D2 does, the sound volume set by the user may be output as it is at D1, but a sound volume of 0.1 times of the sound volume set by the user may be output at D2.

The controller 180 may adjust the output of the mobile terminal 100 based on other conditions as well as the distance to the wireless charging available area. Namely, a horizontal axis in FIG. 12 may be replaced by the distance to the wireless charging available area, the remaining capacity of the battery 195, or the like. For example, when the remaining capacity of the battery 195 is smaller than the reference remaining capacity, the sound volume may be reduced.

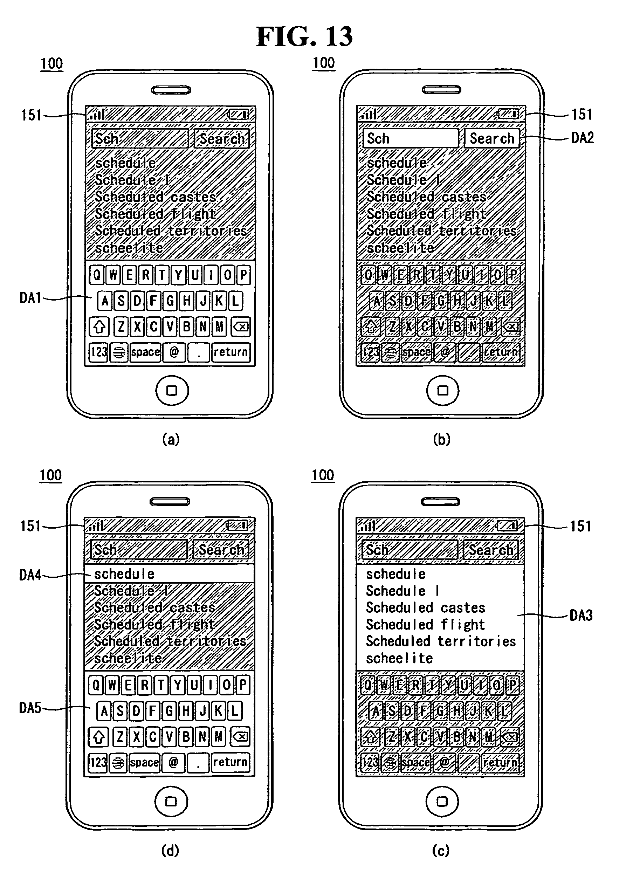

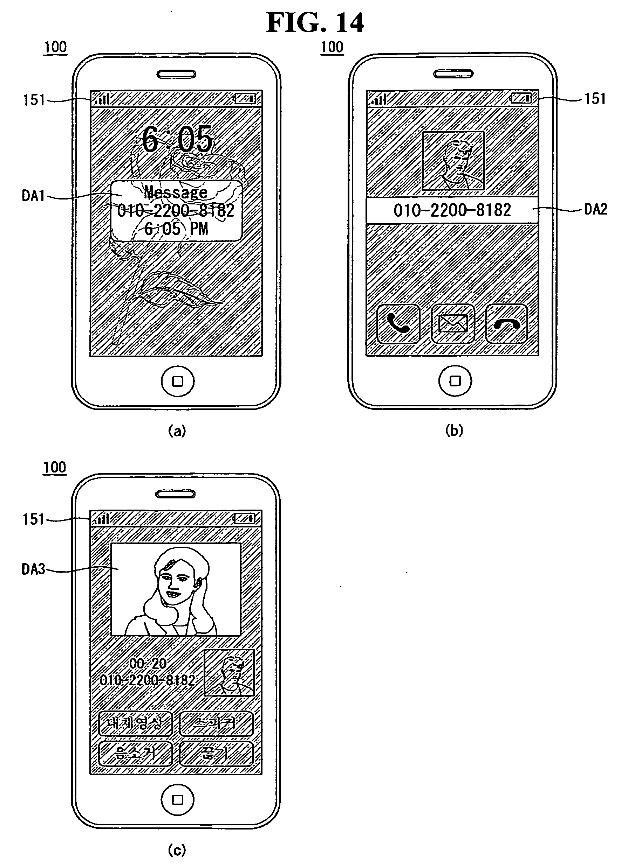

FIGS. 13 and 14 show displays according to the distance to a wireless charging area and a charging state of the mobile terminal according to an embodiment of the present invention.

As shown in FIGS. 13 and 14, the controller 180 of the mobile terminal 100 according to an embodiment of the present invention may selectively activate and/or deactivate a particular area of the display 151. A Qwerty keyboard for receiving characters, or the like, may be displayed on the display 151. The controller 180 may selectively activate/deactivate a partial area of the display 151 based on the factors such as the remaining capacity of the battery 195 and/or the distance to the wireless charging available area, or the like.

The selectively activated/deactivated area may be related to at which location, information to be transferred to the user is located. For example, information which is received and newly output, such as a message, information input by the user, or the like, may be information to be transferred to the user. In comparison, information which has been already output or information supplemetarily added to information to be transferred may be information having a lower necessity to be transferred to the user. The controller 180 may selectively activate a portion where information to be transferred to the user based on such references.

As shown in FIG. 13(a), immediately when a character is input, the controller 180 may activate the first area DA1. Namely, other portions than the first area DA1 may be deactivated or a backlight may be turned off. Although the other portions than the first area DA1 become dark or deactivated, the user may input characters by using the Qwerty keyboard displayed on the activated first area DA1.

As shown in FIG. 13(b), the controller 180 may activate the second area DA2. Namely, an input window area in which the user can actually check characters may be activated.

As shown in FIG. 13(c), the controller may activate the third area DA3. Namely, the controller 180 may activate the area displaying search results.

As shown in FIG. 13(d), the controller 180 may activate the fourth area DA4. Namely, the controller 180 may activate only the most optimized result portion among the search results.

The controller 180 may activate and/or deactivate an optimized point according to an operational state of a corresponding application, as well as fixedly activate and/or deactivate only a particular area of the display 151.

As shown in FIG. 14(a), when a message is received, the controller may selectively activate only a corresponding portion.

As shown in FIG. 14(b), the controller may selectively activate only a portion of the phone number of a counterpart to which a call is attempted or which is in call communication.

As shown in FIG. 14(c), the controller 180 may selectively activate only a photo image portion of a counterpart to which a video call is attempted or who is in video call communication.

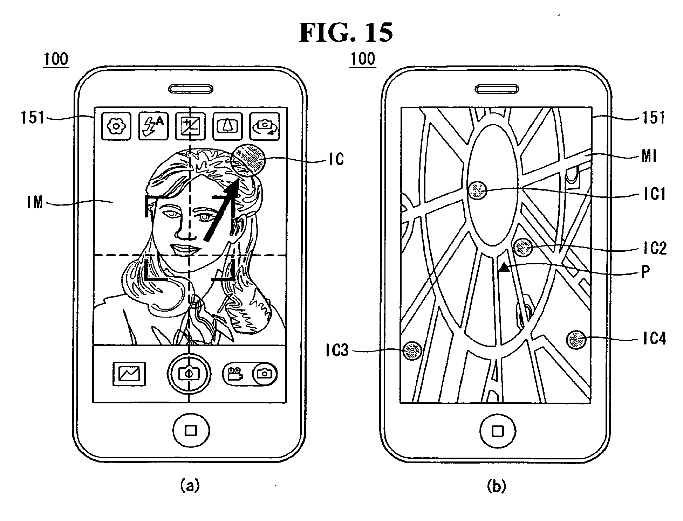

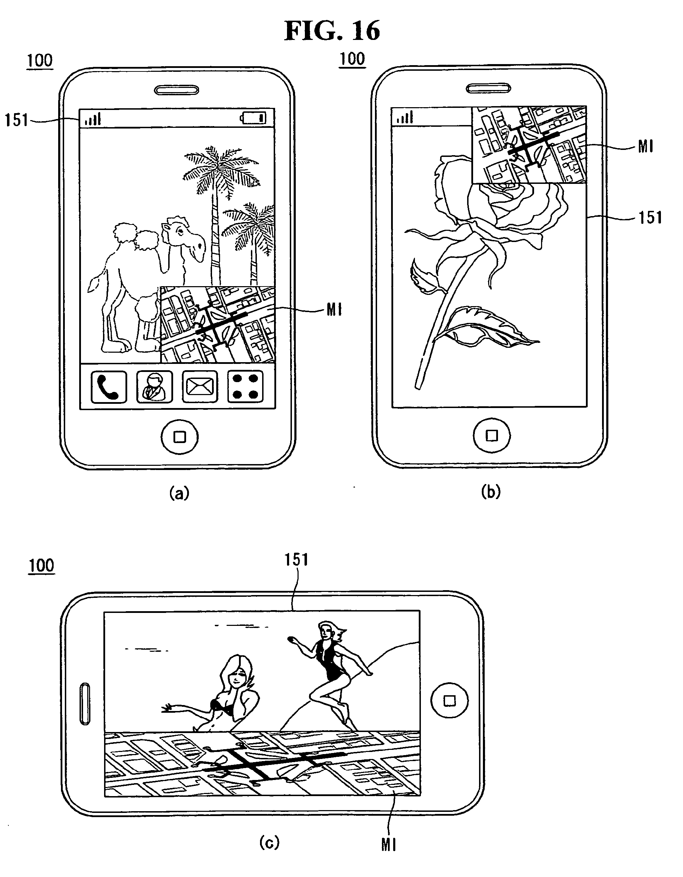

FIGS. 15 and 16 illustrate a method of displaying a wireless charging area of the mobile terminal according to an embodiment of the present invention.

As shown In FIGS. 15 and 16, the controller 180 of the mobile terminal 100 according to an embodiment of the present invention may provide information regarding an area in which wireless charging is available to the user.

As shwon in FIG. 15(a), the user may perform image capturing by using the camera 121. When the image is displayed on the display 151, an indicator IC indicating a wireless charging available area may be displayed. Also, information regarding a location of a wireless charging available area with respect to a current location of the mobile terminal 100 may also be displayed along with the indicator IC.

As shown in FIG. 15(b), a map may be displayed on the display 151. A current location P of the mobile terminal 100 and first to fourth indicators IC1 to IC4 indicating wireless charging available locations around the current location P may be displayed on the map.

The first to fourth indicators IC1 to IC4 may indicate charging efficiency at the corresponding wireless charging available locations, respectively. For example, charging efficiency of a device located at a corresponding spot may be visually displayed such that its color is different or the shape of the indicator is different.

As shown in FIG. 16(a) to (c), the map M1 showing the wireless charging available location may be displayed to have various forms. Namely, the map may be displayed such that it does not interfere with the displaying of the application currently being executed.

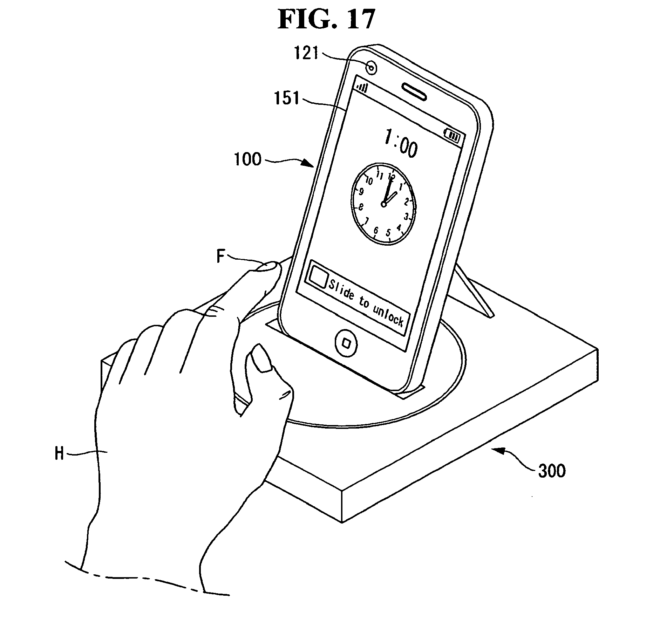

FIGS. 17 to 19 illustrate operations of the mobile terminal according to another embodiment of the present invention.

As shown in FIGS. 17 to 19, the mobile terminal 100 according to another embodiment of the present invention may be manipulated by a gesture when it is mounted on a wireless charging cradle 300.

As shown in FIG. 17, the user may control the mobile terminal 100 through a gesture input using his hand (H) and/or his finger (F) at a front side of the mobile terminal 100.

When the user makes a gesture by using his hand (H) and/or his finger (F), an image of the corresponding movement may be captured by the camera 121 positioned on a front surface of the mobile terminal 100. The controller 180 may analyze the captured image of the gesture and execute a function corresponding to the gesture.

The controlling of the mobile terminal 100 through a gesture may be useful when the mobile terminal 100 is mounted on a contaceless wireless charging cradle 300. When the mobile terminal 100 is mounted on the wireless charging cradle 300, the mobile terminal 100 may be required to be positioned to corresponding to a pre-set position and direction for an optimum charging operation. With the mobile terminal positioned in such a manner, if the display 151, or the like, is touched to manipulate the mobile terminal 100, the mobile terminal 100 may wobble. Thus, while the mobile terminal is positioned on the wireless charging cradle 300, the mobile terminal 100 may be controlled through a gesture, thus effectively perform charging operation.

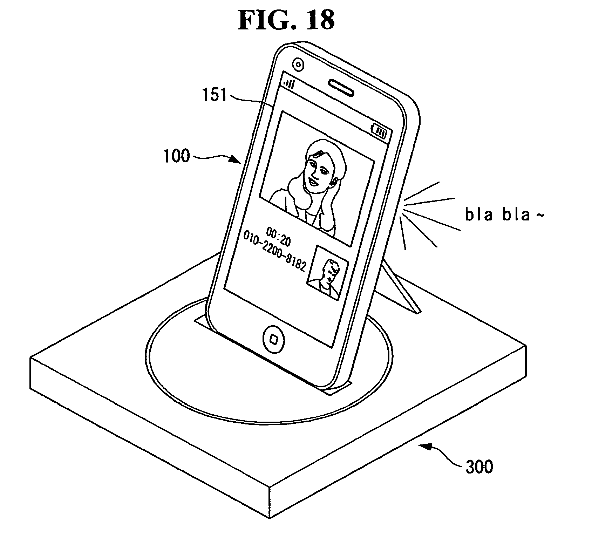

As shown in FIG. 18, when the mobile terminal 100 is mounted on the wireless charging cradle 300, an image of the display 151 may be changed to correspond to the mounted direction. For example, when the mobile terminal 100 is vertically mounted, the image may be displayed in a vertical direction, and when the mobile terminal 100 is horizontally mounted, the image may be displayed in a horizontal direction. In addition, the audio output module 152 may output a sound corresponding to the image.

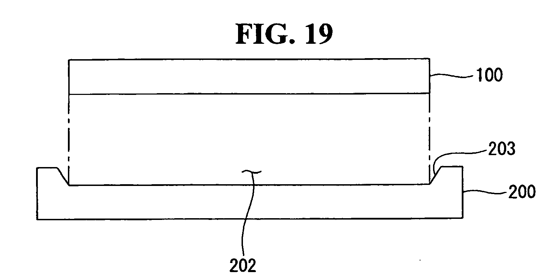

As shown in FIG. 19, the mobile terminal 100 may be mounted on the wireless charging cradle 200. In order for the mobile terminal 100 to be mounted at the optimum position, a coupling guide 203 and a mounting portion 202 may be provided on the wireless charging cradle 200.

The coupling guide 203 may allow the main body of the mobile terminal 100 to be naturally coupled at a proper position of thee wireless charging cradle 200.

The mounting portion 202 may allow the main body of the mobile terminal 100 coupled at the proper position to be properly charged without wobble.

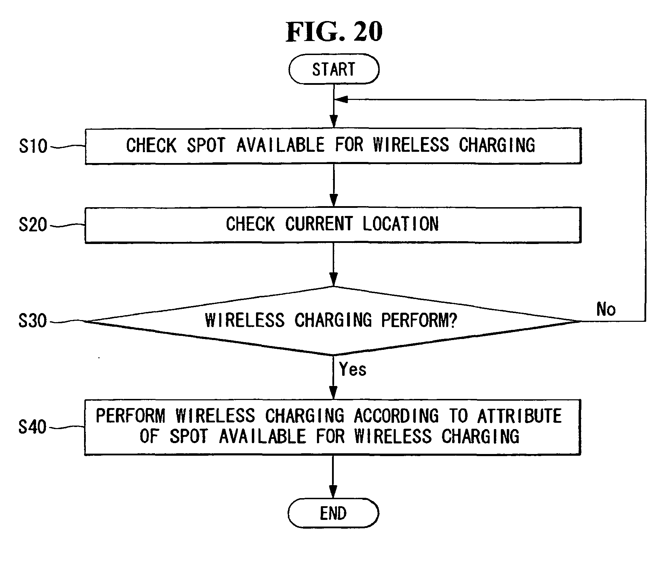

FIG. 20 is a flowchart of the mobile terminal according to an embodiment of the present invention.

As shown in FIG. 20, the controller 180 of the mobile terminal according to an embodiment of the present invention may perform checking a spot available for wireless charging in operation S10.

The wireless charging may refer to a method for charging power to the battery 195 without a physical contact point.

The battery 195 may be installed in the mobile terminal 100, and provide power to the mobile terminal 100 while the mobile terminal 100 is carried around. The battery 195 may be charged upon receiving power through the wired charging module 191 and/or the wireless charging module 193. A charged state of the battery 195 may be detected through a remaining battery capacity detection module 142 of the sensing unit 140.

The remaining battery capacity detection module 142 may detect power quantity charged in the battery 195. Namely, when a maximum power quantity chargeable in the battery 195 is 1, the remaining battery capacity detection module 142 can detect a numerical value corresponding to the power quantity currently charged in the battery 195. The remaining battery capacity detection module 142 may substantially measure the current power quantity in real time or at certain time intervals.

The wired charging module 191 may be a unit for charging the battery 195 upon receiving power through a fixed line. For example, the wired charging module 191 may be a device which is provided with power from a socket (or an electrical outlet) and supplies power to the battery 195.

The wireless charging module 191 may be a unit used to charge the battery 195 upon receiving power wirelessly. The wireless charging module 193 is different from the wired charging module 191, in that a wireless power line is formed between the socket and the mobile terminal 100 while the battery 195 is in a state of being charged. The charging of the battery 195 through the wireless charging module 193 may be made through magnetic induction, magnetic resonance, or the like.

The wireless charging using magnetic induction may refer to a scheme of wirelessly transmitting power by using electromagnetic induction. Electromagnetic induction may be a scheme of performing charging through magnetic field induced between a primary coil transmitting electricity and a secondary coil receiving electricity.

Wireless charging using magnetic resonance may be a wireless charging scheme using the principle of making a transmitter and a receiver resonant with the same frequency. Magnetic resonance may allow wireless charging at a relatively remote area. In addition, magnetic resonance may allow a transmitter and a receiver to have a one-to-many relationship. Namely, magnetic resonance allows for charging of several mobile terminals 100.

In operation S20, checking a current location may be performed.

The current location may be a current spot of the user who owns the mobile terminal 100. The current location may be calculated based on signals received from artificial satellites transmitting GPS signals. For example, the spot where the mobile terminal 100 is located on the surface of the earth may be calculated by employing triangulation based on GPS signals received from at least three artificial satellites.

In operation S30, determining whether to perform wireless charging may be performed.

Wireless charging may be available within a certain radius from a device that performs a wireless charging function. This may be similar to Wi-Fi which is used within a certain radius from an access point (AP). Also, in the case of wireless charging using magnetic induction, a spot available for wireless charging may refer to a spot in which charging based on the magnetic induction scheme is provided.

In order to perform wireless charging, the mobile terminal 100 is required to be within a certain range from the spot providing wireless charging. Also, wireless charging may be performed when power charged in the battery 195 is a certain level or lower. In addition, wireless charging may be performed when the user makes a particular motion. When such conditions are met, wireless charging may be performed.

When wireless charging is determined to be performed, performing wireless charging according to an attribute of the spot available for wireless charging may be performed in operation S40.

The attribute of the spot available for wireless charging may be whether or not wireless charging at the spot is billed. Namely, the attribute may be whether or not wireless charging is paid or free.

When wireless charging is free, charging may be performed through the wireless charging module 193 without performing a particular procedure.

When wireless charging is paid, a sequential process for performing wireless charging may be performed.

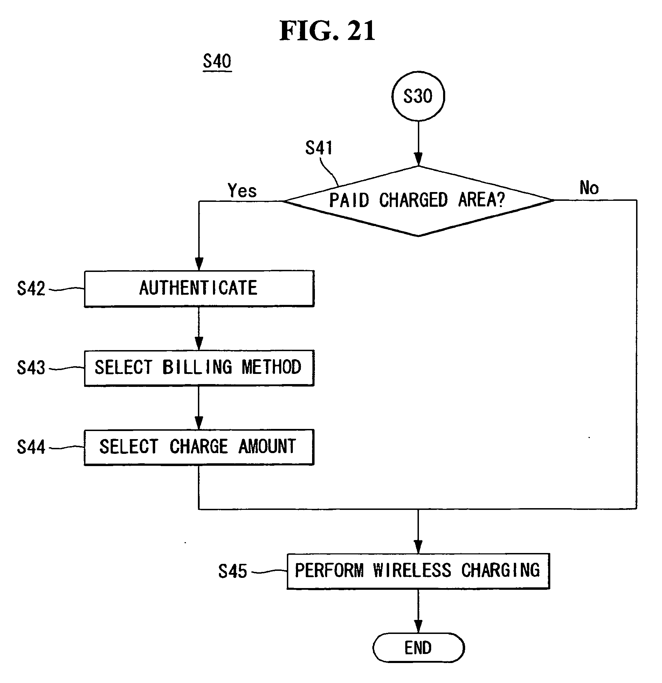

FIG. 21 is a flowchart illustrating a process of wireless charging the mobile terminal.

As shown in FIG. 21, the controller 180 may perform determining whether or not the mobile terminal is located in a paid charge area in operation S41.

The paid charge area may be an area in which billing is made according to the amount and/or time of wireless charging. Wireless charging in the paid charge area may be performed only on the certain mobile terminal 100 which has performed a billing operation.

In the case of the paid charge area, an authentication in operation S42 may be performed.

Authentication may be a procedure of specifying the mobile terminal 100 in order to perform a billing procedure and perform wireless charging. For example, authentication may be a procedure for specifying the mobile terminal 100 to perform wireless charging. Authentication may be performed through an NFC and/or a communication provider server, or the like (will be described in detail later).

When authentication is successfully made, selecting a billing method may be performed in operation S43.

The billing method may be through which method payment for paid wireless charging is to be made. For example, the billing method may be a method of making payment through any one of payment means such as an NFC, a credit card, and the like.

When the billing method is selected, selecting a charge amount may be performed in operation S44.

The charge amount may be an amount of power to be charged in the battery 195.

The charge amount may be indicated in various forms and selected. For example, the charge amount may be expressed by percentile. Namely, when a fully charged state is 100% and a current charge amount of 10%, the user may select charging of only 70%. Also, the charge amount may be expressed as time. For example, charging may be performed for one hour from now on.

When the charge amount is selected, performing wireless charging may be performed in operation S45.

When wireless charging is performed, the power quantity charged in the battery 195 may increase.

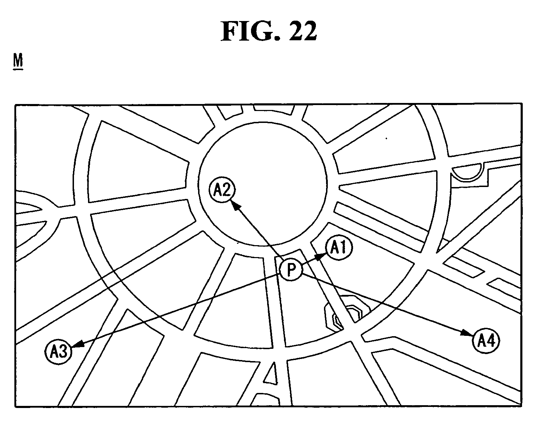

FIG. 22 is a view of displaying areas in which wireless charging is available on a map.

As shown in FIG. 22, the mobile terminal 100 may be located at spot P. The location of the mobile terminal 100 may be calculated through the location information module 115.

There may be spots available for wireless charging around the mobile terminal 100. For example, the spots available for wireless charging may include A1 to A4. Information regarding the spots A1 to A4 may be obtained through the mobile communication module 112, the wireless Internet module 113, the short-range communication module 114, or the like.

The information regarding the spots A1 to A4 may include information regarding the locations of the spots A1 to A4, information regarding a range available for wireless charging through the spots A1 to A4, information regarding a wireless charging strength of the spots A1 to A4, information regarding wireless charging efficiency of the spots A1 to A4, and the like. In addition, the information regarding the spots A1 to A4 may further include information regarding whether or not billing is made in the wireless charging spots A1 to A4.

When the information regarding the spot P, current location of the mobile terminal 100, and the information regarding the spots A1 to A4, spots available for wireless charging are obtained, the controller 180 can calculate the distance to the spots available for wireless charging.

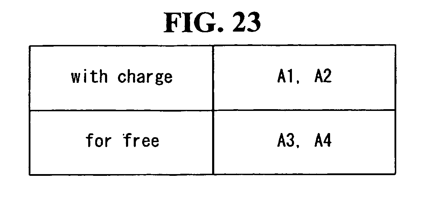

FIG. 23 is a table dividing the wireless charging available area of FIG. 22 into a paid area and a free area.

As shown in FIG. 23, the spots available for wireless charging may be divided into paid spots and free spots. Namely, the spots A1 and A2 can be available for wireless charging with charge, and the spots A3 and A4 are available for wireless charging free of charge.

Detailed information regarding the spots available for wireless charging can be obtained from a server, or the like. For example, the information regarding the spots available for wireless charging may be obtained from a server in real time, or may be retrieved from the memory 160 after the information was obtained and stored in the memory 160.

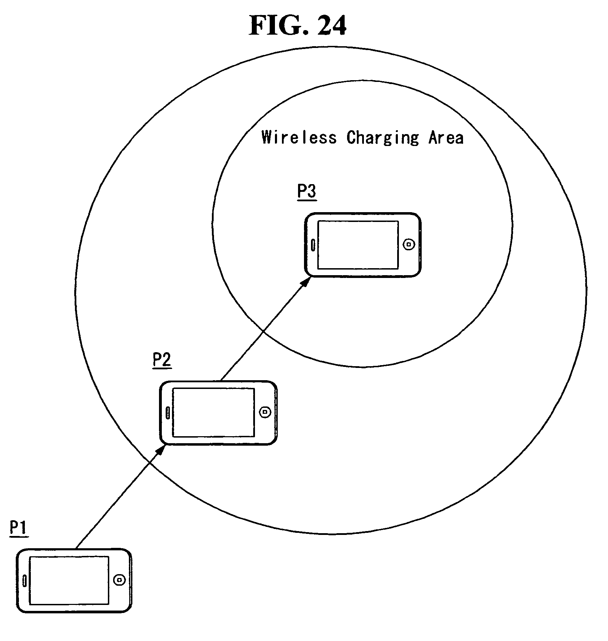

FIG. 24 is a view showing a process of entering a wireless charging area.

As shown in FIG. 24, the mobile terminal 100 according to an embodiment of the present invention may be in a situation in which it gradually enters the wireless charging available area.

The mobile terminal 100 may be currently at a first location P1. The first location P1 may be an outer side of the area available for wireless charging. Namely, this means that, when the mobile terminal is at the first location P1, charging using wireless charging may not be performed. In this state, the controller 180 may perform a controlling operation of minimizing the use of the battery 195 of the mobile terminal 100. For example, as mentioned above, the controller 180 may perform an operation such as reducing the quantity of light of the display 151 or reducing a display area of the display 151.

The mobile terminal 100 may be at a second location P2. The second location P2 may be an outer side of the area available for wireless charging. Namely, it means that, like the first location P1, charging using wireless charging may not be performed also at the second location P2. Here, unlike the first location P1, the second location P2 may be closer to a third location P3, an area available for wireless charging of the mobile terminal 100. When the mobile terminal is close to the third location P3, an area available for wireless charging, the controller 180 may increase the quantity of light, a display area, of the like, of the display 151 compared with the first location P1.

The mobile terminal 100 may be at the third location P3. The third location P3 may be an inner side of the area available for wireless charging. When wireless charging is performed at the third location P3, the controller 180 may maximize the quantity of light, the display area, or the like, of the display 151.

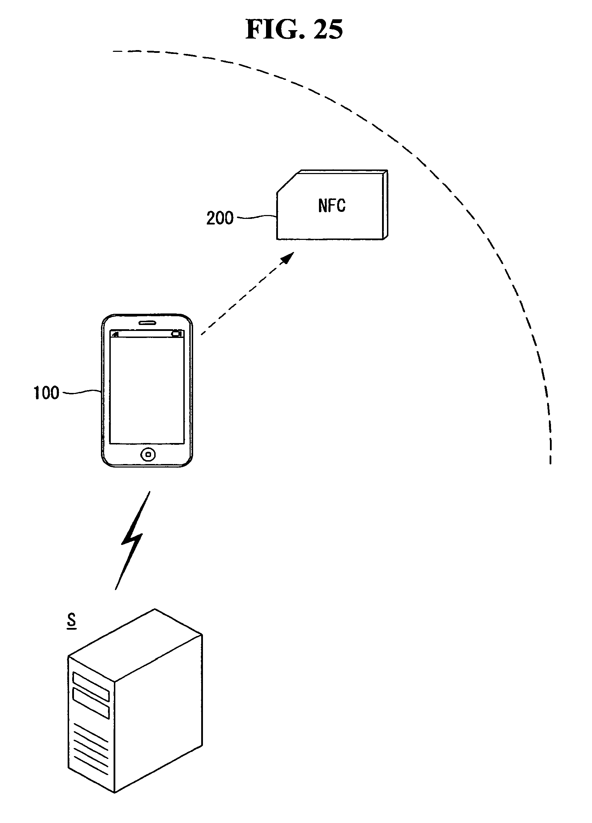

FIG. 25 is a view showing an authentication process of the mobile terminal of FIG. 20.

As shown in FIG. 25, the mobile terminal may be authenticated through an NFC device 200 and/or a server (S).

The authentication through the NFC device 200 may be initiated through an operation of tagging the mobile terminal 100 to the NFC device 200. When tagging is performed, the short-range communication module 114 and the NFC device 200 may exchange data. In this process, the mobile terminal 100 may be authenticated.

The authentication through the server (S) may be performed through the mobile communication module 112 and/or the wireless Internet module 113. Namely, when the mobile terminal 100 transmits a unique number, or the like, to the server (S), an authentication process may be performed with the server (S) which has received the unique number.

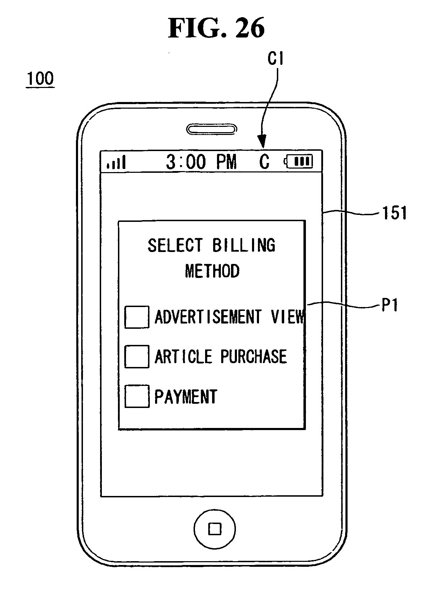

FIG. 26 is a view showing setting of a charging scheme of the mobile terminal of FIG. 20.

As shown in FIG. 26, the user of the mobile terminal 100 may select a billing method. Namely, when wireless charging is performed with charge, the user may determine how the cost for wireless charging is to be paid.

The selecting of a billing method may be performed by selecting one of relevant content displayed on the display 151. For example, a first pop-up window P1 allowing for selecting of a billing method may be displayed on the display 151.

Menus for selecting any one of billing through advertisement view, billing through purchasing of an article, and billing through direct payment may be displayed on the first pop-up window P1. The user may select an appropriate menu from them to perform billing.

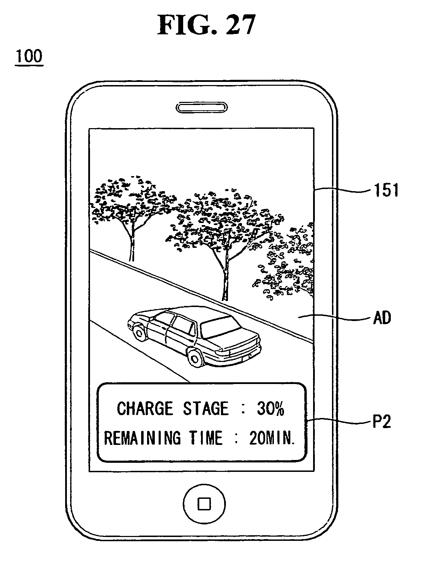

FIGS. 27 to 29 are views showing a process according to the charging scheme of FIG. 25.

As shown in FIGS. 27 to 29, the billing methods according to an embodiment of the present invention may be performed in various manners.

As shown in FIG. 27, a current charge state and a remaining time required for charging may be displayed through a second pop-up window P2 on the display 151.

An advertisement image AD, in the place of an amount of money to be paid for charging, may be displayed on the display 151. The advertisement image AD may be continuously displayed or displayed for a certain period of time while charging is performed. The advertisement image AD may be displayed on the entirety or a portion of the display 151. In addition, the advertisement image AD may be displayed on the entirety of the display 151 at an initial stage, and when a certain time has lapsed, it may be displayed on a portion of the display 151.

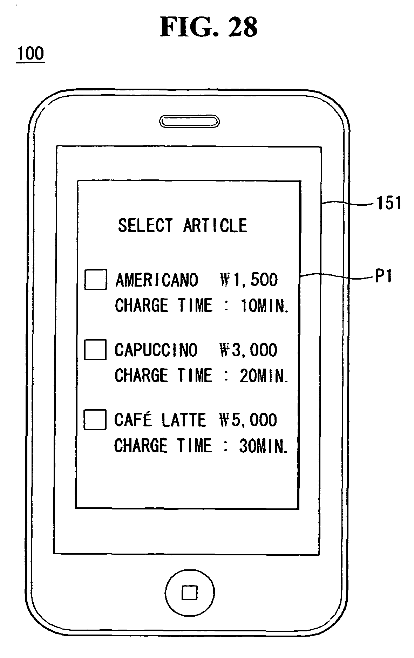

As shown in FIG. 28, menus for purchasing an article may be displayed through a third pop-up window P3 on the display 151.

The types and costs of articles, and a time allowed for charging in reward may be displayed on the third pop-up window P3. The user may select a particular article and perform an operation of paying the cost to perform wireless charging. Payment of the cost for the particular article may be performed through the NFC device (200 in FIG. 25) and/or the server (S).

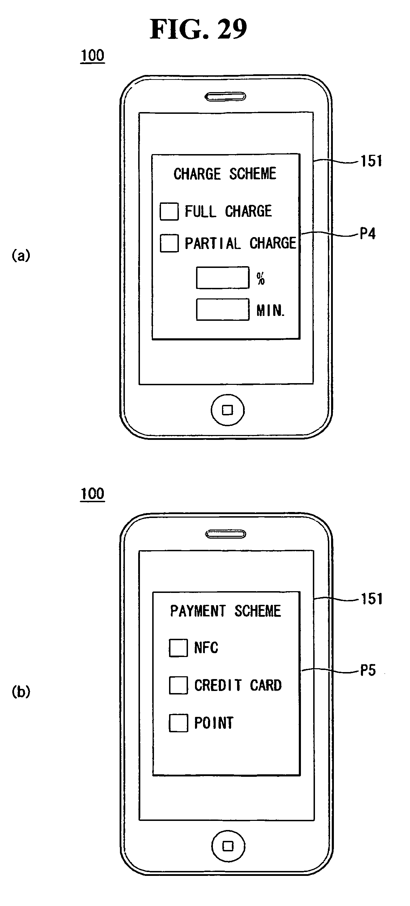

As shown in FIG. 29(a), menus allowing for selecting of a charging method may be displayed through a fourth pop-up window P4 on the display 151.

The charging method may be any one of charging the entire charge capacity of the battery 195 and charging a portion of the entire charge capacity of the battery 195.

The partial charging may be performed based on whether or not which percent of the entire charge capacity of the battery 195 is to be charged by percentile and/or how long charging is to be performed.

As shown in FIG. 29(b), menus allowing for selecting of a payment method may be displayed through a fifth pop-up window P5 on the display 151.

As the payment method, one of a method performed by using the NFC, a method performed by using a credit card, and a method performed by using points may be selected.

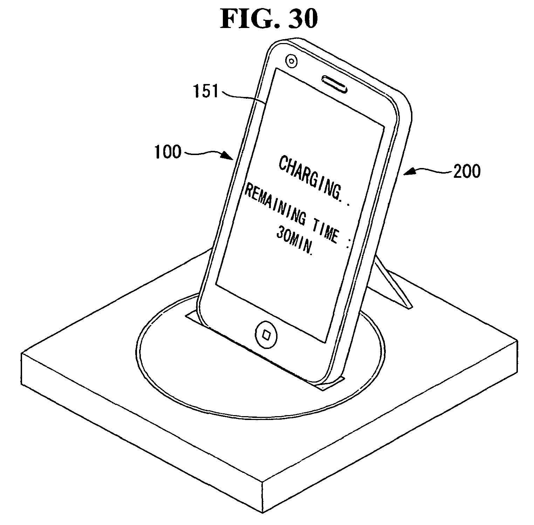

FIGS. 30 to 32 are views showing operation of a mobile terminal according to another embodiment of the present invention.

As shown in FIGS. 30 to 32, the mobile terminal 100 according to another embodiment of the present invention may prevent an unauthorized person to manipulate the mobile terminal 100.

As shown in FIG. 30, wireless charging may be performed in a state in which the mobile terminal is mounted at a certain position. For example, the mobile terminal 100 may be mounted on a stool 200 in which wireless charging is performed by using magnetic induction.

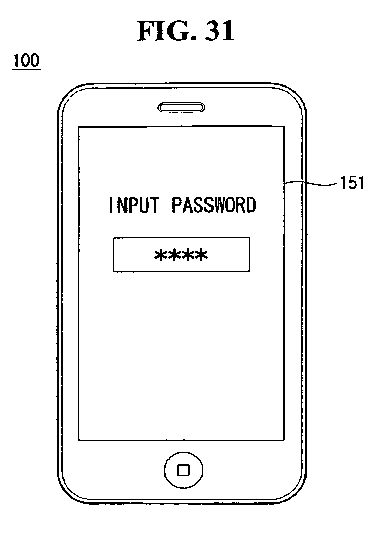

As shown in FIG. 31, someone may manipulate the mobile terminal 100 mounted on the stool 200, or release the mounted stated of the mobile terminal 100.

When the mounted state of the mobile terminal 100 is released, the mobile terminal may perform a process of checking whether or not the mobile terminal 100 has been released from the mounted state by an authorized user. For example, an image for receiving a password from a user may be displayed on the display 151 of the mobile terminal 100. When a proper password is not input, functions of the mobile terminal 100 may be limited. Whether or not the user is an authorized user may also be determined by receiving a user's fingerprint and comparing it with a registered fingerprint, besides the input of the password.

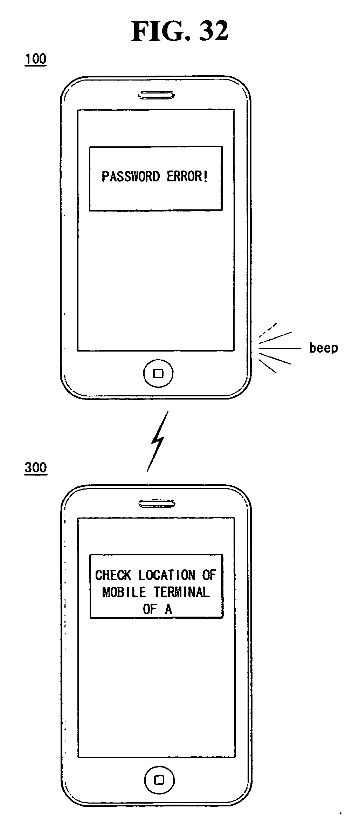

As shown in FIG. 32, when the password has an error, the mobile terminal 100 may generate an alarm sound through the audio output module 152. Also, the mobile terminal 100 may inform a pre-set different mobile terminal 300 that the mobile terminal 100 is being manipulated by an unauthorized user.

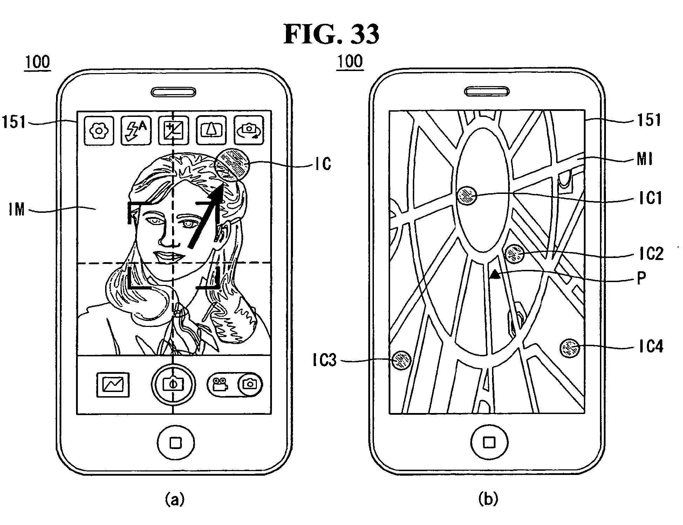

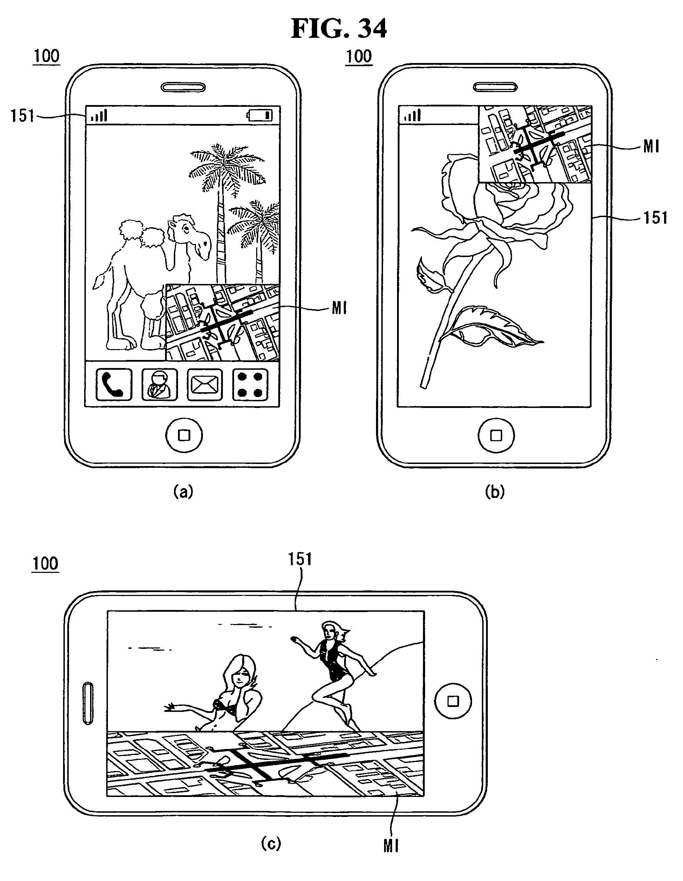

FIGS. 33 and 34 are views showing a method for displaying a wireless charging area of the mobile terminal according to another embodiment of the present invention.

As shown In FIGS. 33 and 34, the controller 180 of the mobile terminal 100 according to an embodiment of the present invention may provide information regarding an area in which wireless charging is available to the user.

As shown in FIG. 33(a), the user may perform image capturing by using the camera 121. When the image is displayed on the display 151, an indicator IC indicating a wireless charging available area may be displayed. Also, information regarding a location of a wireless charging available area with respect to a current location of the mobile terminal 100 may also be displayed along with the indicator IC.

As shown in FIG. 33(b), a map may be displayed on the display 151. A current location P of the mobile terminal 100 and first to fourth indicators IC1 to IC4 indicating wireless charging available locations around the current location P may be displayed on the map.

The first to fourth indicators IC1 to IC4 may indicate charging efficiency at the corresponding wireless charging available locations, respectively. For example, charging efficiency of a device located at a corresponding spot may be visually displayed such that its color is different or the shape of the indicator is different. In addition, the color or shape of the indicators may be displayed differently to indicate whether or not wireless charging at the corresponding location is billed.

As shown in FIG. 34(a) to (c), the map M1 showing the wireless charging available location may be displayed to have various forms. Namely, the map may be displayed such that it does not interfere with the displaying of the application currently being executed.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal (100), comprising:
a display (151) configured for displaying information;
a battery (195) configured for providing electrical power for the mobile terminal (100);
a wireless charging unit (193) configured for electrically charging the battery (195) using power received wirelessly from outside the mobile terminal (100); and
a controller (180) configured for:
changing an activated state of at least a portion of the display (151) when a charge level of the battery (195) is less than a pre-set reference level and based on a distance between the mobile terminal (100) and a transmitter that is configured for wirelessly sending the power to the wireless charging unit (193) by reducing one of a quantity of light and a display area of the display (151) in a first location (P1) outside an area available for charging such that wireless charging may not be performed;
**characterized in that** the changing of the activated state of the at least one portion of the display (151) further comprises:
the controller (180) increasing the one of the quantity of light and the display area of the display (151) with respect to the first location (P1) when the mobile terminal (100) is in a second location (P2) outside the area available for charging and closer to the area for wireless charging than the first location (P1), the controller (180); and
the controller (180) maximizing the one of the quantity of light and the display area of the display (151) when the mobile terminal (100) is in a third location (P3) at the area available for charging such that wireless charging may be performed.

2. The mobile terminal of claim 1, wherein the controller (180) is further configured for distinguishably setting display features of the at least one portion of the display (151) from a remaining portion of the display (151) based on an application currently being executed.

3. The mobile terminal of claim 1, wherein the controller (180) is further configured for selectively activating a portion of the display (151) designated for displaying information to be transferred to or from a user of the mobile terminal (100).

4. The mobile terminal of claim 1, wherein the controller (180) is further configured for controlling the display (151) to display a geographical area serviced by the transmitter.

5. The mobile terminal of claim 4, wherein the controller (180) is further configured for controlling the display (151) to display at least a charging efficiency available in the geographical area serviced by the transmitter or a charging range of the transmitter.

6. The mobile terminal of claim 4, wherein the controller (180) is further configured for controlling the display (151) to display a location of the transmitter on a map displayed on the display (151) or to overlap at least a portion of an application currently being executed on the display (151).

7. The mobile terminal of claim 1, further comprising:
an audio output module (152) configured for outputting audio signals,
wherein the controller (180) is further configured for controlling the audio output module (152) to change a volume output level of the audio signals when a charge level of the battery (195) is less than the pre-set reference value, and
wherein changing the volume output level of the audio signals is based on the distance between the mobile terminal (100) and the transmitter.

8. The mobile terminal of claim 1, wherein:
the mobile terminal (100) is configured to be mounted on a wireless charging cradle (200, 300) during battery charging via the wireless charging unit (193); and
the controller (180) is further configured for controlling the display (151) to display an image in an orientation corresponding to an orientation of the mobile terminal (100) when the mobile terminal is mounted in the wireless charging cradle (200, 300).

9. A control method of a mobile terminal (100), the method comprising:
determining, via a battery charge level detection module of the mobile terminal (100), a remaining charge level of a battery (195) of the mobile terminal (100); and
changing, via a controller (180) of the mobile terminal (100), an activated state of at least a portion of a display (151) of the mobile terminal (100) when the remaining charge level of the battery (195) is determined to be less than a pre-set reference level, the changing of the activated state based on a distance between the mobile terminal (100) and a transmitter that is configured for wirelessly sending power to a wireless charging unit (193) of the mobile terminal (100) by reducing one of a quantity of light and a display area of the display (151) in a first location (P1) outside an area available for charging such that wireless charging may not be performed;
**characterized in that** the changing of the activated state of the at least one portion of the display (151) further comprises:
increasing the one of the quantity of light and the display area of the display (151) with respect to the first location (P1) when the mobile terminal (100) is in a second location (P2) outside the area available for charging and closer to the area for wireless charging than the first location (P1), the controller (180); and
maximizing the one of the quantity of light and the display area of the display (151) when the mobile terminal (100) is in a third location (P3) at the area available for charging such that wireless charging may be performed.

10. The method of claim 9, further comprising:
executing an application via the controller (180),
wherein the changing of the activated state of the at least the portion of the display (151) comprises distinguishably setting display features of the at least the portion of the display (151) from a remaining portion of the display (151) based on the executed application while the application is executed.

11. The method of claim 9, wherein changing of the activated state of the at least the portion of the display (151) comprises selectively activating a portion of the display (151) designated for displaying information to be transferred to or from a user of the mobile terminal (100).

12. The method of claim 9, further comprising:
controlling, via the controller (180), the display (151) to display a geographical area serviced by the transmitter.

13. The method of claim 9, further comprising:
performing a payment procedure when billing is required for wirelessly charging the battery (195), the payment procedure performed through at least one billing method.

## Patentansprüche

1. Mobiles Endgerät (100) mit:
einem Display (151), das dazu konfiguriert ist, Information darzustellen;
einer Batterie (195), die dazu konfiguriert ist, elektrische Energie für das mobile Endgerät (100) bereitzustellen;
einer Drahtlos-Ladeeinheit (193), die dazu konfiguriert ist, die Batterie (195) unter Verwendung von Energie elektrisch aufzuladen, die von außerhalb des mobilen Endgeräts (100) drahtlos empfangen wird; und
einem Steuergerät (180), das dazu konfiguriert ist:
einen aktivierten Zustand mindestens eines Teils des Displays (151) basierend auf einem Abstand zwischen dem mobilen Endgerät (100) und einem Sender zu ändern, der dazu konfiguriert ist, die Energie drahtlos an die Drahtlos-Ladeeinheit zu übertragen, wenn ein Ladepegel der Batterie (195) kleiner ist als ein vorgegebener Referenzwert, indem eine Lichtmenge oder ein Darstellungsbereich des Displays (151) an einem ersten Ort (P1) reduziert wird, der außerhalb eines Bereichs liegt, in dem eine Ladefunktion verfügbar ist, so dass der Drahtlos-Ladevorgang nicht ausgeführt werden kann;
**dadurch gekennzeichnet, dass**
das Ändern des aktivierten Zustands des mindestens einen Teils des Displays (151) ferner beinhaltet, dass:
das Steuergerät (180) die Lichtmenge oder den Darstellungsbereich des Displays (151) im Vergleich zum ersten Ort (P1) vergrößert, wenn das mobile Endgerät (100) sich an einem zweiten Ort (P2) befindet, der außerhalb des für eine Ladefunktion verfügbaren Bereichs, aber näher an dem Bereich angeordnet ist, in dem eine Drahtlos-Ladefunktion verfügbar ist, als der erste Ort (P1); und
das Steuergerät (180) die Lichtmenge oder den Darstellungsbereich des Displays (151) maximiert, wenn das mobile Endgerät (100) sich an einem dritten Ort (P3) befindet, der innerhalb des Bereichs liegt, in dem eine Ladefunktion verfügbar ist, so dass ein Drahtlos-Ladevorgang ausgeführt werden kann.

2. Mobiles Endgerät nach Anspruch 1,
bei dem das Steuergerät (180) ferner dazu konfiguriert ist, Darstellungsmerkmale des mindestens einen Teils des Displays (151) basierend auf einer gegenwärtig ausgeführten Anwendung von einem restlichen Teil des Displays (151) unterscheidbar einzustellen.

3. Mobiles Endgerät nach Anspruch 1,
bei dem das Steuergerät (180) ferner dazu konfiguriert ist, einen Teil des Displays (151) selektiv zu aktivieren, der zum Darstellen von an einen oder von einem Benutzer des mobilen Endgeräts (100) zu übertragender Information spezifiziert ist.

4. Mobiles Endgerät nach Anspruch 1,
bei dem das Steuergerät (180) ferner dazu konfiguriert ist, das Display (151) dazu anzusteuern, einen durch den Sender bedienten geografischen Bereich darzustellen.

5. Mobiles Endgerät nach Anspruch 4,
bei dem das Steuergerät (180) ferner dazu konfiguriert ist, das Display (151) dazu anzusteuern, eine in dem durch den Sender bedienten geografischen Bereich verfügbare Ladeeffizienz oder einen Ladebereich des Senders darzustellen.

6. Mobiles Endgerät nach Anspruch 4,
bei dem das Steuergerät (180) ferner dazu konfiguriert ist, das Display (151) dazu anzusteuern, einen Ort des Senders auf einer auf dem Display (151) dargestellten Karte darzustellen oder mindestens einen Teil einer gegenwärtig ausgeführten Anwendung auf dem Display (151) zu überlappen.

7. Mobiles Endgerät nach Anspruch 1, ferner mit:
einem Audioausgabemodul (152), das dazu konfiguriert ist, Audiosignale auszugeben,
wobei das Steuergerät (180) ferner dazu konfiguriert ist, das Audioausgabemodul (152) zu steuern, um einen Ausgabelautstärkepegel der Audiosignale zu ändern, wenn ein Ladepegel der Batterie (195) niedriger ist als der vorgegebene Referenzwert, und
wobei das Ändern des Ausgabelautstärkepegels der Audiosignale auf dem Abstand zwischen dem mobilen Endgerät (100) und dem Sender basiert.

8. Mobiles Endgerät nach Anspruch 1, wobei:
das mobile Endgerät (100) dazu konfiguriert ist, während eines Batterieladevorgangs über die Drahtlos-Ladeeinheit (193) in einer Drahtlos-Ladestation (200, 300) angeordnet zu werden, und
wobei das Steuergerät (180) ferner dazu konfiguriert ist, das Display (151) zu steuern, um ein Bild in einer einer Orientierung des mobilen Endgeräts (100) entsprechenden Orientierung darzustellen, wenn das mobile Endgerät in der Drahtlos-Ladestation (200, 300) angeordnet ist.

9. Steuerverfahren für ein mobiles Endgerät (100), wobei das Verfahren die Schritte aufweist:
Bestimmen eines Restladungspegels einer Batterie (195) des mobilen Endgeräts (100) durch ein Batterieladungspegelerfassungsmodul des mobilen Endgeräts (100); und
Ändern eines aktivierten Zustands mindestens eines Teils eines Displays (151) des mobilen Endgeräts (100) durch ein Steuergerät (180) des mobilen Endgeräts (100), indem eine Lichtmenge oder ein Darstellungsbereich des Displays (151) an einem ersten Ort (P1) reduziert wird, der außerhalb eines Bereichs liegt, in dem eine Ladefunktion verfügbar ist, so dass der Drahtlos-Ladevorgang nicht ausgeführt werden kann, wenn festgestellt wird, dass der Restladungspegel der Batterie (195) niedriger ist als ein vorgegebener Referenzwert, wobei die Änderung des aktivierten Zustands auf einem Abstand zwischen dem mobilen Endgerät (100) und einem Sender basiert, der dazu konfiguriert ist, drahtlos Energie an eine Drahtlos-Ladeeinheit (193) des mobiles Endgeräts (100) zu übertragen;
**dadurch gekennzeichnet, dass**
das Ändern des aktivierten Zustands des mindestens einen Teils des Displays (151) ferner beinhaltet:
Vergrößern der Lichtmenge oder des Darstellungsbereichs des Displays (151) im Vergleich zum ersten Ort (P1) durch das Steuergerät (180), wenn das mobile Endgerät (100) sich an einem zweiten Ort (P2) befindet, der außerhalb des für eine Ladefunktion verfügbaren Bereichs, aber näher an dem Bereich angeordnet ist, in dem eine Drahtlos-Ladefunktion verfügbar ist, als der erste Ort (P1); und
Maximieren der Lichtmenge oder des Darstellungsbereichs des Displays (151), wenn das mobile Endgerät (100) sich an einem dritten Ort (P3) befindet, der innerhalb des Bereichs liegt, in dem eine Ladefunktion verfügbar ist, so dass ein Drahtlos-Ladevorgang ausgeführt werden kann.

10. Verfahren nach Anspruch 9, ferner umfassend
Ausführen einer Anwendung durch das Steuergerät (180),
wobei das Ändern des aktivierten Zustands des mindestens einen Teils des Displays (151) das von einem restlichen Teil des Displays (151) unterscheidbare Einstellen von Darstellungsmerkmalen des mindestens einen Teils des Displays (151) basierend auf der ausgeführten Anwendung aufweist, während die Anwendung ausgeführt wird.

11. Verfahren nach Anspruch 9,
bei dem das Ändern des aktivierten Zustands des mindestens einen Teils des Displays (151) das selektive Aktivieren eines Teils des Displays (151) aufweist, der zum Darstellen von zu einem oder von einem Benutzer des mobilen Endgeräts (100) zu übertragender Information spezifiziert ist.

12. Verfahren nach Anspruch 9, ferner umfassend
Ansteuern des Displays (151) durch das Steuergerät (180) zum Darstellen eines durch den Sender bedienten geografischen Bereichs.

13. Verfahren nach Anspruch 9, ferner umfassend
Ausführen einer Bezahlungsprozedur, wenn zum drahtlosen Laden der Batterie (195) eine Abrechnung erforderlich ist, wobei die Bezahlungsprozedur durch mindestens ein Abrechnungsverfahren ausgeführt wird.

## Revendications

1. Terminal mobile (100), comprenant :
un affichage (151) configuré pour afficher des informations ;
une batterie (195) configurée pour délivrer de l'énergie électrique pour le terminal mobile (100) ;
une unité de charge sans fil (193) configurée pour charger électriquement la batterie (195) en utilisant l'énergie reçue sans fil depuis l'extérieur du terminal mobile (100) ; et
un contrôleur (180) configuré pour :
changer un état activé d'au moins une partie de l'affichage (151) lorsque le niveau de charge de la batterie (195) est inférieur à un niveau de référence préétabli et sur la base d'une distance entre le terminal mobile (100) et un émetteur qui est configuré pour envoyer sans fil l'énergie vers l'unité de charge sans fil (193) en réduisant l'une parmi une quantité de lumière et une zone d'affichage de l'affichage (151) dans un premier emplacement (P1) à l'extérieur d'une zone disponible pour la charge d'une manière telle que la charge sans fil ne peut pas être exécutée ;
**caractérisé en ce que** le changement de l'état activé de la au moins une partie de l'affichage (151) comprend en outre :
le contrôleur (180) augmentant celle parmi la quantité de lumière et la zone d'affichage de l'affichage (151) par rapport au premier emplacement (P1) lorsque le terminal mobile (100) se trouve dans le deuxième emplacement (P2) à l'extérieur de la zone disponible pour la charge, et plus près de la zone pour la charge sans fil que le premier emplacement (P1), du contrôleur (180) ; et
le contrôleur (180) maximisant celle parmi la quantité de lumière et la zone d'affichage de l'affichage (151) lorsque le terminal mobile (100) se trouve dans un troisième emplacement (P3) au niveau de la zone disponible pour la charge d'une manière telle que la charge sans fil peut être exécutée.

2. Terminal mobile selon la revendication 1, dans lequel le contrôleur (180) est en outre configuré pour établir de manière reconnaissable des caractéristiques d'affichage de la au moins une partie de l'affichage (151) à partir d'une partie restante de l'affichage (151) sur la base d'une application actuellement en cours d'exécution.

3. Terminal mobile selon la revendication 1, dans lequel le contrôleur (180) est en outre configuré pour activer sélectivement une partie de l'affichage (151) désignée pour afficher des informations devant être transférées vers ou depuis un utilisateur du terminal mobile (100).

4. Terminal mobile selon la revendication 1, dans lequel le contrôleur (180) est en outre configuré pour commander l'affichage (151) pour afficher une zone géographique desservie par l'émetteur.

5. Terminal mobile selon la revendication 4, dans lequel le contrôleur (180) est en outre configuré pour commander l'affichage (151) pour afficher au moins une efficacité de charge disponible dans la zone géographique desservie par l'émetteur ou une plage de charge de l'émetteur.

6. Terminal mobile selon la revendication 4, dans lequel le contrôleur (180) est en outre configuré pour commander l'affichage (151) pour afficher un emplacement de l'émetteur sur une carte affichée sur l'affichage (151) ou pour superposer au moins une partie d'une application actuellement en cours d'exécution sur l'affichage (151).

7. Terminal mobile selon la revendication 1, comprenant en outre :
un module de sortie audio (152) configuré pour délivrer en sortie des signaux audio,
dans lequel le contrôleur (180) est en outre configuré pour commander le module de sortie audio (152) pour changer un niveau de sortie de volume des signaux audio lorsqu'un niveau de charge de la batterie (195) est inférieur à la valeur de référence préétablie, et
dans lequel le changement du niveau de sortie de volume des signaux audio est basé sur la distance entre le terminal mobile (100) et l'émetteur.

8. Terminal mobile selon la revendication 1, dans lequel :
le terminal mobile (100) est configuré pour être monté sur un socle de charge sans fil (200, 300) pendant la charge de la batterie via l'unité de charge sans fil (193) ; et
le contrôleur (180) est en outre configuré pour commander l'affichage (151) pour afficher une image dans une orientation correspondant à une orientation du terminal mobile (100) lorsque le terminal mobile est monté dans le socle de charge sans fil (200, 300).

9. Procédé de commande d'un terminal mobile (100), le procédé comprenant les étapes consistant à :
déterminer, via un module de détection de niveau de charge de batterie du terminal mobile (100), un niveau de charge restante d'une batterie (195) du terminal mobile (100) ; et
changer, via un contrôleur (180) du terminal mobile (100), un état activé d'au moins une partie d'un affichage (151) du terminal mobile (100) lorsque le niveau de charge restante de la batterie (195) est déterminé comme étant inférieur à un niveau de référence préétabli, le changement de l'état activé étant basé sur une distance entre le terminal mobile (100) et un émetteur qui est configuré pour envoyer sans fil de l'énergie vers une unité de charge sans fil (193) du terminal mobile (100) en réduisant l'une parmi une quantité de lumière et une zone d'affichage de l'affichage (151) dans un premier emplacement (P1) à l'extérieur d'une zone disponible pour la charge d'une manière telle que la charge sans fil ne peut pas être exécutée ;
**caractérisé en ce que** le changement de l'état activé de la au moins une partie de l'affichage (151) comprend en outre :
l'augmentation de l'une parmi la quantité de lumière et la zone d'affichage de l'affichage (151) par rapport au premier emplacement (P1) lorsque le terminal mobile (100) se trouve dans un deuxième emplacement (P2) à l'extérieur de la zone disponible pour la charge, et plus près de la zone pour la charge sans fil que le premier emplacement (P1), du contrôleur (180) ; et
la maximisation de l'une parmi la quantité de lumière et la zone d'affichage de l'affichage (151) lorsque le terminal mobile (100) se trouve dans un troisième emplacement (P3) au niveau de la zone disponible pour la charge d'une manière telle que la charge sans fil peut être exécutée.

10. Procédé selon la revendication 9, comprenant en outre l'étape consistant à :
exécuter une application via le contrôleur (180),
dans lequel le changement de l'état activé d'au moins la partie de l'affichage (151) comprend l'étape consistant à établir de manière reconnaissable des caractéristiques d'affichage d'au moins la partie de l'affichage (151) à partir d'une partie restante de l'affichage (151) sur la base de l'application exécutée alors que l'application est exécutée.

11. Procédé selon la revendication 9, dans lequel le changement de l'état activé d'au moins la partie de l'affichage (151) comprend l'activation sélective d'une partie de l'affichage (151) désignée pour afficher des informations devant être transférées vers ou depuis un utilisateur du terminal mobile (100).

12. Procédé selon la revendication 9, comprenant en outre l'étape consistant à :
commander, via le contrôleur (180), l'affichage (151) pour afficher une zone géographique desservie par l'émetteur.

13. Procédé selon la revendication 9, comprenant en outre l'étape consistant à :
effectuer une procédure de paiement lorsqu'une facturation est requise pour la charge sans fil de la batterie (195), la procédure de paiement étant réalisée par l'intermédiaire d'au moins un procédé de facturation.
